# EUROPÄISCHE PATENTANMELDUNG

(11) **EP 4 729 314 A2**
(43) Veröffentlichungstag der Anmeldung: **22.04.2026**
(21) Anmeldenummer: 26162232.8
(22) Anmeldetag: 19.01.2021
(51) Int. Cl.: B60D 1/62

(54) **VORRICHTUNG ZUM ANKUPPELN EINES ANHÄNGERS**

(30) Priorität: 21.01.2020 DE 102020101304; 02.07.2020 DE 102020117528
(62) Teilanmeldung aus: 21152394.9
(71) Anmelder: ACPS Automotive GmbH, 74379 Ingersheim (DE)
(72) Erfinder: Holz, Christian, 70736 Fellbach (DE)
(74) Vertreter: Hoeger, Stellrecht & Partner Patentanwälte mbB

(57) **Zusammenfassung**

Um bei einer heckseitig an einer Kraftfahrzeugkarosserie montierbaren Vorrichtung zum Ankuppeln eines Anhängers oder einer Lastenträgereinheit, umfassend einen Haltearm, der an einem ersten Ende im Betrieb fest mit der Kraftfahrzeugkarosserie verbunden ist und an einem zweiten Ende ein Ankuppelelement trägt, die auf den Haltearm wirkenden Kräfte zu erfassen ist vorgesehen, dass im Betrieb an dem Ankuppelelement angreifende und von dem Haltearm auf die Kraftfahrzeugkarosserie übertragene Kräfte durch eine Auswerteeinheit mit einer Sensoranordnung erfasst werden, die mindestens drei Deformationssensoren aufweist.

## Beschreibung

Die Erfindung betrifft eine heckseitig an einer Kraftfahrzeugkarosserie montierbare Vorrichtung zum Ankuppeln eines Anhängers oder einer Lastenträgereinheit, umfassend einen Haltearm, der an einem ersten Ende im Betrieb fest mit der Kraftfahrzeugkarosserie verbunden ist und an einem zweiten Ende zum Tragen eines Ankuppelelements ausgebildet ist.

Derartige Vorrichtungen sind aus dem Stand der Technik bekannt.

Bei diesen besteht das Problem, möglichst präzise und zuverlässig auf die den Haltearm wirkende Kräfte zu erfassen.

Diese Aufgabe wird bei einer Vorrichtung der eingangs beschriebenen Art erfindungsgemäß dadurch gelöst, dass im Betrieb an dem Ankuppelelement angreifende und von dem Haltearm auf die Kraftfahrzeugkarosserie übertragenen Kräfte durch eine Auswerteeinheit mit einer Sensoranordnung erfasst werden, die mindestens drei Deformationssensoren aufweist und dass insbesondere die mindestens drei Deformationssensoren der Sensoranordnung auf derselben Seite einer bei einer Biegedeformation des Haltearms nicht deformierten neutralen Faser des Haltearms angeordnet sind.

Der Vorteil der erfindungsgemäßen Lösung liegt darin, dass damit die Möglichkeit besteht, in einfacher Weise die Deformationen des Haltearms mit der Sensoranordnung zu erfassen.

Insbesondere ist hierbei vorteilhaft, wenn alle Sensoren der Sensoranordnung auf derselben Seite der bei einer Deformation des Haltearms nicht deformierten neutralen Faser des Haltearms angeordnet sind.

Die eingangs genannte Aufgabe wird ferner bei einer Vorrichtung der eingangs beschriebenen Art erfindungsgemäß dadurch gelöst, dass auf einer Seite des Haltearms ein Krafterfassungsmodul angeordnet ist, das eine Sensoranordnung umfasst, welche im Betrieb an dem Ankuppelelement angreifende Kräfte und von dem Haltearm auf die Kraftfahrzeugkarosserie übertragene Kräfte erfasst.

Ein derartiges Krafterfassungsmodul stellt eine vorteilhafte einfache Lösung zur Erfassung der auf den Haltearm wirkenden Kräfte dar.

Insbesondere ist dabei vorgesehen, dass die Sensoranordnung des Krafterfassungsmoduls mindestens drei Deformationssensoren aufweist.

Hinsichtlich der Anordnung des Kraftfahrzeugmoduls wurden dabei bislang keine näheren Angaben gemacht.

So sieht eine vorteilhafte Lösung vor, dass das Krafterfassungsmodul im Betriebszustand auf keiner einer Fahrbahn zugewandten Seite des Haltearms angeordnet ist, das heißt, dass das Krafterfassungsmodul lediglich auf den Seiten des Haltearms angeordnet ist, die nicht der Fahrbahn zugewandt sind, da damit verhindert wird, dass durch Kontakt des Haltearms mit auf einer Fahrbahn oder auf einem Untergrund angeordneten Objekten das Krafterfassungsmodul beschädigt wird.

Besonders günstig ist es dabei, wenn das Krafterfassungsmodul im Betriebszustand auf einer einer Fahrbahn abgewandten Seite des Haltearms angeordnet ist.

Eine derartige Anordnung des Krafterfassungsmoduls hat den Vorteil, dass dies die am wenigsten beschädigungsträchtige Seite für das Krafterfassungsmodul darstellt.

Um einerseits die Deformationssensoren vorteilhaft anordnen zu können und andererseits die Deformationen des Haltearms vorteilhaft auf die Deformationssensoren übertragen zu können, ist bei einer weiteren Lösung der eingangs genannten Aufgabe vorzugsweise vorgesehen, dass im Betrieb an dem Ankuppelelement angreifende und von dem Haltearm auf die Kraftfahrzeugkarosserie übertragene Kräfte durch eine Auswerteeinheit mit einer Sensoranordnung erfasst werden, die mindestens drei Deformationssensoren aufweist, dass die Deformationssensoren auf mindestens einem Deformationsübertragungselement angeordnet sind, das mit dem Haltearm verbunden ist.

Dabei können die Deformationen auf unterschiedlichen Deformationsübertragungselementen angeordnet sein.

Besonders günstig ist es bei einer weiteren Lösung der eingangs genannten Aufgabe, wenn im Betrieb an dem Ankuppelelement angreifende und von dem Haltearm auf die Kraftfahrzeugkarosserie übertragene Kräfte durch eine Auswerteeinheit mit einer Sensoranordnung erfasst werden, die mindestens drei Deformationssensoren aufweist, und wenn alle Deformationssensoren der Sensoranordnung auf einem gemeinsamen Deformationsübertragungselement angeordnet sind.

Eine besonders vorteilhafte Erfassung der auf den Haltearm einwirkenden Kräfte ist insbesondere dann möglich, wenn jeder der mindestens drei Deformationssensoren bei Einwirkung von ein und derselben Kraft auf das Ankuppelelement unterschiedlich große Deformationen des Haltearms erfasst, da damit in einfacher Weise sich unterschiedlich ausgerichtete Kräfte, die auf das Ankuppelelement wirken können, separieren lassen.

Hinsichtlich der Verbindung des Deformationsübertragungselements mit dem Haltearm ist vorzugsweise vorgesehen, dass das Deformationsübertragungselement relativbewegungsfrei und damit starr an mindestens zwei Befestigungsbereichen mit dem Haltearm verbunden ist und dass mindestens einer der Deformationssensoren zwischen den Befestigungsbereichen des Deformationselements angeordnet sind.

Noch vorteilhafter ist es, wenn das Deformationsübertragungselement mit mindestens drei Befestigungsbereichen mit dem Haltearm verbunden ist und wenn jeweils zwischen zwei der Befestigungsbereiche mindestens einer der Deformationssensoren angeordnet ist.

Hinsichtlich der Verbindung der Befestigungsbereiche des Deformationsübertragungselements mit dem Haltearm wurden bislang keine näheren Angaben gemacht.

Prinzipiell ist es denkbar, die Befestigungsbereiche unmittelbar mit dem Haltearm, beispielsweise durch Verschweißen mit diesem, zu verbinden.

Eine besonders vorteilhafte Lösung sieht jedoch vor, dass das Deformationsübertragungselement in den Befestigungsbereichen mit dem Haltearm mittels Verbindungselementen verbunden ist.

Eine derartige Verbindung mit dem Haltearm mittels der Verbindungselemente lässt sich besonders günstig dann realisieren, wenn die Verbindungselemente einerseits starr mit dem Haltearm und andererseits starr mit den Befestigungsbereichen des Deformationsübertragungselements verbunden sind.

Eine besonders vorteilhafte Lösung sieht vor, dass die Verbindungselemente, insbesondere einstückig, an den Haltearm angeformt sind.

Bei dem Vorsehen einer derartigen Verbindung zwischen dem Haltearm und dem Deformationsübertragungselement ist vorzugweise vorgesehen, dass die Verbindungselemente Deformationen des Haltearms in jeweils zwischen den Verbindungselementen liegenden Deformationsbereichen des Haltearms auf die Befestigungsbereiche des Deformationsübertragungselements übertragen.

Insbesondere ist es günstig, wenn jeweils zwischen zwei Verbindungselementen ein Deformationsbereich des Haltearms liegt.

Eine konstruktiv besonders vorteilhafte Lösung sieht vor, dass der Haltearm mindestens zwei Deformationsbereiche aufweist, deren Deformationen über beiderseits des jeweiligen Deformationsbereichs angeordnete Verbindungselemente auf Befestigungsbereiche des Deformationsübertragungselements übertragen wird, zwischen denen ein deformationsbehafteter Bereich des Deformationsübertragungselements liegt.

Hinsichtlich der Anordnung der zwei Deformationsbereiche im Haltearm ist es besonders vorteilhaft, wenn die mindestens zwei Deformationsbereiche in einer Erstreckungsrichtung des Haltearms aufeinanderfolgend angeordnet sind.

Ferner ist es zur Erfassung der Deformationen in den deformationsbehafteten Bereichen günstig, wenn mindestens ein Deformationssensor in einem der deformationsbehafteten Bereiche des Deformationsübertragungselements angeordnet ist.

Insbesondere ist dabei mindestens ein Deformationssensor in jedem der deformationsbehafteten Bereiche des Deformationsübertragungselements angeordnet.

Darüber hinaus ist zweckmäßigerweise vorgesehen, dass jeder deformationsbehaftete Bereich mit einem deformationssteifen Bereich des Deformationsübertragungselements verbunden ist und dass die Befestigungsbereiche jeweils in einem deformationssteifen Bereich liegen, so dass diese von dem jeweiligen deformationsstreifen Bereich umfasst sind.

Unter einem deformationssteifen Bereich ist dabei insbesondere zu verstehen, dass dieser eine signifikant, das heißt mindestens um einen Faktor zwei, noch besser mindestens um einen Faktor fünf, höhere Steifigkeit aufweist als ein deformationsbehafteter Bereich.

Diese Lösung hat den Vorteil, dass ein möglichst großer Teil der von den Deformationsbereichen des Haltearms auf das Deformationsübertragungselement übertragenen Deformationen sich nicht über das ganze Deformationsübertragungselement verteilt, sondern sich im Wesentlichen in den deformationsbehafteten Bereichen auswirken, um somit eine möglichst große Deformation in diesen deformationsbehafteten Bereichen, in denen insbesondere die Deformationssensoren angeordnet sind, zu erreichen und in den deformationssteifen Bereichen des Deformationsübertragungselements möglichst geringe oder keine Deformationen vorliegen zu haben.

Besonders günstig ist es, wenn die deformationsbehafteten Bereiche jeweils zwischen zwei deformationssteifen Bereichen angeordnet sind.

Ferner ist es für eine optimale Verlagerung möglichst der gesamten auf das Deformationsübertragungselement übertragenen Deformationen auf die deformationsbehafteten Bereiche günstig, wenn die deformationssteifen Bereiche und die deformationsbehafteten Bereiche in einer Deformationsrichtung aufeinanderfolgend angeordnet sind, das heißt, wenn die deformationssteifen und die deformationsbehafteten Bereiche in der Richtung, in der die wesentliche Deformation auf das Deformationsübertragungselement übertragen wird, aufeinanderfolgend angeordnet sind.

Ferner ist es vorteilhaft, wenn die deformationsbehafteten Bereiche als Deformationskonzentrationsbereiche ausgebildet sind.

Unter einem Deformationskonzentrationsbereich ist insbesondere zu verstehen, dass sich in diesem der überwiegende Teil, das heißt mehr als 50 %, noch besser mehr als 70 %, der auf das Deformationsübertragungselement übertragenen oder einwirkenden Deformationen ausbilden.

Eine derartige Ausbildung der deformationsbehafteten Bereiche hat den Vorteil, dass sich in dieser die Deformationen im Wesentlichen konzentrieren lassen und somit möglichst große Deformationen durch die jeweiligen Deformationssensoren erfasst werden können.

Hinsichtlich der Ausbildung des Materials des Deformationsübertragungselements wurden bislang keine näheren Angaben gemacht.

So ist vorzugsweise vorgesehen, dass das Material des Deformationsübertragungselements außerhalb der deformationsbehafteten Bereiche als deformationssteifes oder deformationsinertes Material ausgebildet ist, das heißt, dass sich beispielsweise außerhalb der deformationsbehafteten Bereiche weniger als 30 % noch besser weniger als 20 %, vorzugsweise weniger als 10 %, der auf das Deformationsübertragungselement übertragenen oder einwirkenden Deformationen ausbilden.

Andererseits ist vorzugsweise vorgesehen, dass das Material des Deformationsübertragungselements in den deformationsbehafteten Bereichen durch eine geeignete Formgebung, beispielsweise eine Querschnittsverengung, deformationsgeneigt oder deformationsgeeignet ist.

Um nicht durch die Deformationen des Haltearms veranlasste Deformationen des Deformationsübertragungselements kompensieren zu können, ist vorzugsweise vorgesehen, dass das Deformationsübertragungselement neben dem jeweiligen deformationsbehafteten Bereich einen deformationsfreien Bereich aufweist, auf welchem mindestens ein Referenzdeformationssensor angeordnet ist.

In einem deformationsfreien Bereich treten aufgrund von dessen Ausbildung und Anordnung im Wesentlichen keine, das heißt insbesondere weniger als 20 %, noch besser weniger als 10 % und bevorzugt weniger als 5 %, der von den auf das Deformationsübertragungselement übertragenen oder einwirkenden Deformationen auf.

Mit einem derartigen Referenzdeformationssensor in einem deformationsfreien Bereich besteht die Möglichkeit, durch andere Einflüsse als die auf das Deformationsübertragungselement übertragenen oder einwirkenden Deformationen bedingte Materialdeformationen im Deformationsübertragungselement, welche beispielsweise durch thermische Einflüsse entstehen, über die Referenzdeformationssensoren zu erfassen und dann, da diese auch von dem Deformationssensor erfasst werden, dadurch zu korrigieren.

Aus diesem Grund ist vorzugsweise vorgesehen, dass der jeweilige deformationsfreie Bereich aus demselben Material wie der deformationsbehaftete Bereich ausgebildet ist.

Ferner ist vorzugsweise vorgesehen, dass der jeweilige deformationsfreie Bereich einseitig mit einem deformationssteifen Bereich des Deformationsübertragungselements verbunden ist.

Eine besonders vorteilhafte geometrische Gestaltung sieht vor, dass der deformationsfreie Bereich des Deformationsübertragungselements zungenartig ausgebildet ist.

Darüber hinaus ist vorzugsweise vorgesehen, dass der deformationsfreie Bereich des Deformationsübertragungselements aus demselben Material insbesondere mit derselben Materialdicke hergestellt ist, wie der deformationsbehaftete Bereich.

Um eine optimale Kopplung zwischen den von den Referenzdeformationssensoren erfassten Effekten und den von den Deformationssensoren erfassten Effekten zu erreichen, ist vorzugsweise vorgesehen, dass die Referenzdeformationssensoren thermisch mit dem Deformationsübertragungselement gekoppelt sind.

Insbesondere ist es hierdurch möglich, dass die Referenzdeformationssensoren mittels des Deformationsübertragungselements thermisch mit den Deformationssensoren gekoppelt sind.

Insbesondere in dem Fall, dass jedem Deformationssensor ein Referenzdeformationssensor zugeordnet ist, ist eine optimale thermische Kopplung dann erreicht, wenn zwischen dem jeweiligen Deformationssensor und dem diesem zugeordneten Referenzdeformationssensor jeder mit einem Deformationssensor versehene deformationsbehaftete Bereich thermisch mit dem diesem zugeordneten und den zugeordneten Referenzdeformationssensor tragenden deformationsfreien Bereich gekoppelt ist.

Insgesamt ist es vorteilhaft, wenn der den jeweiligen Referenzdeformationssensor tragende deformationsfreie Bereich dasselbe thermische Verhalten aufweist, wie der den entsprechenden Deformationssensor tragende deformationsbehaftete Bereich.

Um möglichst dieselben Deformationen im Bereich des Referenzdeformationssensors vorliegen zu haben, wie im Bereich des Deformationssensors, ist zweckmäßigerweise vorgesehen, dass der jeweilige den Referenzdeformationssensor tragende deformationsfreie Bereich eine geometrische Form aufweist, die mit dem den Deformationssensor tragenden deformationsbehafteten Bereich vergleichbar, vorzugsweise identisch, ist.

Insbesondere ist es hierbei ebenfalls vorteilhaft, wenn der deformationsfreie Bereich des Deformationsübertragungselements aus demselben Material hergestellt ist, wie der deformationsbehaftete Bereich des Deformationsübertragungselements.

Um die Funktionsfähigkeit der Referenzdeformationssensoren zu überwachen, ist vorzugsweise vorgesehen, dass den Referenzdeformationssensoren mindestens ein Temperatursensor zur Funktionsüberwachung zugeordnet ist.

Noch besser ist es, wenn jedem der Referenzdeformationssensoren ein Temperatursensor zur Funktionsüberwachung zugeordnet ist.

Hinsichtlich der Ausbildung des Deformationsübertragungselements wurden bislang keine näheren Angaben gemacht.

So sieht eine vorteilhafte Lösung vor, dass das Deformationsübertragungselement plattenähnlich ausgebildet ist und jeder einen Deformationssensor tragende deformationsbehaftete Bereich durch eine Querschnittseinschnürung des Deformationsübertragungselements gebildet ist.

Insbesondere ist hierbei vorgesehen, wenn die Querschnittseinschnürung des Deformationsübertragungselements durch eine Einschnürung einer Flächenausdehnung des Deformationsübertragungselements gebildet ist.

Die Deformationssensoren und die Referenzdeformationssensoren können unterschiedlichst ausgebildete Sensoren sein, die Dehnungsvorgänge und/oder Stauchungsvorgänge in den deformationsbehafteten Bereichen erfassen können.

Eine Möglichkeit sieht vor, dass die Deformationssensoren und die Referenzdeformationssensoren als Dehnungssensoren, insbesondere Dehnungsmessstreifen ausgebildet sind.

Eine andere Möglichkeit sieht vor, die Deformationssensoren und die Referenzdeformationssensoren als magnetostriktive oder auch als optische, Dehnungen und Stauchungen erfassende, Sensoren ausgebildet sind.

Insbesondere ist es zur optimalen Kompensation eines Dehnungssensor von Vorteil, wenn der diesen zugeordnete Referenzdehnungssensor mit dem zugeordneten Dehnungssensor identisch ist.

Die eingangs genannte Aufgabe wird erfindungsgemäß insbesondere auch dadurch gelöst, dass der Haltearm zwischen dem ersten Ende und dem zweiten Ende einen ersten Deformationsbereich und einen zweiten Deformationsbereich aufweist, die bei einer in parallel zur Fahrtrichtung in der Längsmittelebene des Haltearms wirkenden Kraft jeweils Deformationen erfahren, die sich von den Deformationen bei einer in der Längsmittelebene und quer zur Fahrtrichtung wirkenden Kraft unterscheiden.

Der Vorteil der erfindungsgemäßen Lösung ist darin zu sehen, dass dadurch, dass der erste und der zweite Deformationsbereich sich bei einer in der Längsmittelebene des Haltearms und parallel zur Fahrtrichtung wirkenden Kraft und einer in der Längsmittelebene und quer, insbesondere senkrecht, zur Fahrtrichtung wirkenden, insbesondere vom Betrag derselben gleich großen Kraft, unterschiedlich verhalten, das heißt sich unterschiedlich stark deformieren, die Möglichkeit besteht, durch diese unterschiedlichen Deformationen des ersten Deformationsbereichs und des zweiten Deformationsbereichs zwischen einer in der Längsmittelebene des Haltearms und parallel zur Fahrtrichtung und einer in der Längsmittelebene des Haltearms und quer zur Fahrtrichtung wirkenden Kraft bei der Auswertung der Signale der Deformationssensoren zu differenzieren.

Noch günstiger ist es, wenn sich der erste und der zweite Deformationsbereich bei einer quer, insbesondere senkrecht, zur Längsmittelebene wirkenden, insbesondere vom Betrag derselben ebenfalls gleich großen Kraft wie die in der Längsmittelebene und parallel zur Fahrtrichtung oder quer zu dieser wirkenden Kräfte, ebenfalls unterschiedlich verhalten, das heißt sich unterschiedlich stark deformieren.

Das unterschiedliche Verhalten des ersten und des zweiten Deformationsbereichs lässt sich durch eine unterschiedliche Formgebung, insbesondere unterschiedliche Querschnitte und/oder einen unterschiedlichen Verlauf und/oder eine unterschiedliche Länge der ersten und zweiten Deformationsbereiche im Haltearm erreichen.

Insbesondere ist dabei vorgesehen, dass der erste und zweite Deformationsbereich in einer Erstreckungsrichtung des Haltearms aufeinanderfolgend angeordnet ist.

Hinsichtlich der Verarbeitung der Signale der Deformationssensoren und der Referenzdeformationssensoren wurden im Zusammenhang mit der bisherigen Erläuterung der erfindungsgemäßen Lösung keine näheren Angaben gemacht.

So sieht eine vorteilhafte Lösung vor, dass jeder Deformationssensor mit dem zugeordneten Referenzdeformationssensor in einer Wheatstone-Brücke verschaltet ist.

Damit lassen sich in einfacher Weise unter unmittelbarer Verwendung der Signale des Deformationssensors und des Referenzdeformationssensors nicht durch die Deformation eines der Deformationsbereiche des Haltearms bedingte Effekte, insbesondere thermische Effekte, kompensieren.

Ferner sieht eine vorteilhafte Lösung vor, dass die Auswerteeinheit einen Prozessor aufweist, welcher die den Deformationen in den deformationsbehafteten Bereichen entsprechenden Werte mit durch eine Kalibrierung ermittelten und in einem Speicher gespeicherten Transformationswerten in die entsprechenden Werte von drei quer, insbesondere senkrecht, zueinander verlaufenden Raumrichtungen wirkenden Kräften auf das Ankuppelelement umrechnet.

Somit besteht die Möglichkeit aus den den Deformationen entsprechenden Werten die in drei quer, insbesondere senkrecht, zueinander verlaufenden Raumrichtungen wirkenden Kräfte auf das Ankuppelelement zu ermitteln.

Besonders günstig ist es dabei, wenn zwei der Kräfte parallel zu, insbesondere in der Längsmittelebene des Haltearms, jedoch quer, insbesondere senkrecht, zueinander verlaufen und wenn die dritte Kraft quer, insbesondere senkrecht, zur Längsmittelebene des Haltearms verläuft.

Eine Verbesserung der Umrechnung der den Deformationen entsprechenden Werte ist dann möglich, wenn in dem Speicher Transformationswerte für in unterschiedlichen Oktanten auf das Ankuppelelement wirkende Kräftekombinationen gespeichert sind, da diese unterschiedlichen Transformationswerte eine optimierte Anpassung an die tatsächlichen Gegebenheiten erlauben.

Insbesondere ist eine Auswerteeinheit entsprechend der erfindungsgemäßen Lösung so ausgebildet, dass die Werte von Deformationssensoren und insbesondere gegebenenfalls auch Referenzdeformationssensoren zur Ermittlung der Deformationen erfasst.

Um außerdem noch die Möglichkeit zu haben, eine Funktionsprüfung der Referenzdeformationssensoren vorzunehmen, ist vorgesehen, dass die Auswerteeinheit Werte von mindestens einem Temperatursensor zur Funktionsprüfung der Referenzdeformationssensoren umfasst.

Noch besser ist es, wenn die Auswerteeinheit zur Funktionsprüfung der Referenzdeformationssensoren Werte von jeweils einem dem jeweiligen Referenzdeformationssensor zugeordneten Temperatursensor erfasst.

Dabei kann der mindestens eine Temperatursensor oder die Temperatursensoren entweder auf einer die Auswerteeinheit tragenden Schaltungsplatine angeordnet sein oder auf dem Deformationsübertragungselement.

Bei den voranstehenden Ausführungsbeispielen wurde nicht näher ausgeführt, wie der Haltearm und das Ankuppelelement miteinander verbunden werden können.

Eine vorteilhafte Lösung sieht vor, dass der Haltearm an seinem zweiten Ende das Ankuppelelement trägt.

In diesem Fall ist es insbesondere günstig, wenn der Haltearm und das Ankuppelelement ein zusammenhängendes Teil bilden, so dass eine Trennung zwischen Haltearm und Ankuppelelement nicht möglich ist.

Insbesondere ist in einem derartigen Fall vorgesehen, dass der Haltearm als Kugelhals ausgebildet ist und an dem zweite Ende das eine Kupplungskugel umfassende Ankuppelelement trägt.

Eine weitere vorteilhafte Lösung sieht vor, dass der Haltearm einen Aufnahmekörper umfasst, der zur lösbaren Aufnahme des Ankuppelelements ausgebildet ist.

Das Ankuppelelement ist beispielsweise Teil eines Trägersystems zum Ankuppeln desselben an den Haltearm sein.

Das Ankuppelelement ist beispielsweise als ein Ankuppelelement eines Trägersystems für Güter, insbesondere Gepäck oder Fahrräder ausgebildet.

Insbesondere ist der Aufnahmekörper dabei so ausgebildet, dass er eine Einsteckaufnahme aufweist, welche durch eine Einstecköffnung zugänglich ist.

Bei einem vorstehend beschriebenen Aufnahmekörper des Haltearms ist vorzugsweise vorgesehen, dass das Ankuppelelement einen Trägerarm umfasst.

Dabei ist der Trägerarm zweckmäßigerweise mit einem Einsteckabschnitt versehen, welcher in die Einsteckaufnahme einsteckbar und in dieser fixierbar ist.

Der Trägerarm ist dann beispielsweise Teil des Trägersystems.

Alternativ dazu ist bei einer weiteren Ausführungsform der Trägerarm so ausgebildet, dass er eine Kupplungskugel trägt.

Bei einer weiteren Ausführungsform ist der Trägerarm mit anderen Ankuppelvorrichtungen, beispielsweise mit einem Kupplungsmaul, versehen.

Zur präzisen Fixierung des Trägerarms ist es zweckmäßig, wenn der Einsteckabschnitt quer zu einer Einsteckrichtung formschlüssig in der Einsteckaufnahme aufgenommen ist und im Funktionszustand in Einsteckrichtung durch einen Formschlusskörper fixiert ist.

Die vorstehende Beschreibung erfindungsgemäßer Lösungen umfasst somit insbesondere die durch die nachfolgenden durchnummerierten Ausführungsformen definierten verschiedenen Merkmalskombinationen:
1. Heckseitig an einer Kraftfahrzeugkarosserie (12) montierbare Vorrichtung zum Ankuppeln eines Anhängers oder einer Lastenträgereinheit, umfassend einen Haltearm (30), der an einem ersten Ende (32) im Betrieb fest mit der Kraftfahrzeugkarosserie (12) verbunden ist und an einem zweiten Ende (34) zum Tragen eines Ankuppelelements (40) ausgebildet ist, wobei im Betrieb an dem Ankuppelelement (40) angreifende und von dem Haltearm (30) auf die Kraftfahrzeugkarosserie (12) übertragene Kräfte durch eine Auswerteeinheit (230) mit einer Sensoranordnung (170) erfasst werden, die mindestens drei Deformationssensoren (172, 174, 176) aufweist, und dass insbesondere die mindesten drei Deformationssensoren (172, 174, 176, 178) der Sensoranordnung (170) auf derselben Seite einer bei einer Biegedeformation des Haltearms (30) nicht längenvariablen neutralen Faser des Haltearms angeordnet sind.
2. Vorrichtung nach dem Oberbegriff der Ausführungsform 1 oder nach Ausführungsform 1, wobei auf einer Seite des Haltearms (30, 30') ein Krafterfassungsmoduls (100) angeordnet ist, das eine Sensoranordnung (170) umfasst, welche im Betrieb an dem Ankuppelelement (40) angreifende und vom Haltearm (30) auf die Kraftfahrzeugkarosserie (12) übertragene Kräfte erfasst.
3. Vorrichtung nach Ausführungsform 2, wobei die Sensoranordnung mindestens drei Deformationssensoren (172, 174, 176) aufweist.
4. Vorrichtung nach Ausführungsform 2 oder 3, wobei das Krafterfassungsmodul (100) im Betriebszustand auf keiner einer Fahrbahn (44) zugewandten Seite des Haltearms (30, 30') angeordnet ist.
5. Vorrichtung nach einer der Ausführungsformen 2 bis 4, wobei das Krafterfassungsmodul (100) im Betriebszustand auf einer einer Fahrbahn (44) abgewandten Seite des Haltearms (30, 30') angeordnet ist.
6. Vorrichtung nach dem Oberbegriff der Ausführungsform 1 oder nach einer der voranstehenden Ausführungsformen, wobei im Betrieb an dem Ankuppelelement (40) angreifende und von dem Haltearm (30) auf die Kraftfahrzeugkarosserie (12) übertragene Kräfte durch eine Auswerteeinheit (230) mit einer Sensoranordnung (170) erfasst werden, die mindestens drei Deformationssensoren (172, 174, 176) aufweist, dass die Deformationssensoren (172, 174, 176, 178) auf mindestens einem Deformationsübertragungselement (102) angeordnet sind, das mit dem Haltearm (30) verbunden ist.
7. Vorrichtung nach dem Oberbegriff der Ausführungsform 1 oder nach einer der voranstehenden Ausführungsformen, wobei im Betrieb an dem Ankuppelelement (40) angreifende und von dem Haltearm (30) auf die Kraftfahrzeugkarosserie (12) übertragene Kräfte durch eine Auswerteeinheit (230) mit einer Sensoranordnung (170) erfasst werden, die mindestens drei Deformationssensoren (172, 174, 176) aufweist, dass alle Deformationssensoren (172, 174, 176, 178) der Sensoranordnung (170) auf einem gemeinsamen Deformationsübertragungselement (102) angeordnet sind.
8. Vorrichtung nach einer der voranstehenden Ausführungsformen, wobei jeder der mindestens drei Deformationssensoren (172, 174, 176) bei Einwirkung von ein und derselben Kraft auf das Ankuppelelement (40) unterschiedliche große Deformationen des Haltearms (30, 30' erfasst.
9. Vorrichtung nach einer der voranstehenden Ausführungsformen, wobei das Deformationsübertragungselement (102) relativbewegungsfrei und damit starr an mindestens zwei Befestigungsbereichen (104, 106, 108) mit dem Haltearm (30) verbunden ist und dass mindestens einer der Deformationssensoren (172, 174, 176, 178) zwischen den Befestigungsbereichen (104, 106, 108) des Deformationsübertragungselements (102) angeordnet sind.
10. Vorrichtung nach einer der voranstehenden Ausführungsformen, wobei das Deformationsübertragungselement (102) mit mindestens drei Befestigungsbereichen (104, 106, 108) mit dem Haltearm (30) verbunden ist und dass jeweils zwischen zwei der Befestigungsbereiche (104, 106, 108) mindestens einer der Deformationssensoren (172, 174, 176, 178) angeordnet ist.
11. Vorrichtung nach einer der voranstehenden Ausführungsformen, wobei das Deformationsübertragungselement (102) in den Befestigungsbereichen (104, 106, 108) mit dem Haltearm (30) mittels Verbindungselementen (114, 116, 118) verbunden ist.
12. Vorrichtung nach Ausführungsform 11, wobei die Verbindungselemente (114, 116, 118) einerseits starr mit dem Haltearm (30) und andererseits starr mit den Befestigungsbereichen (104, 106, 108) des Deformationsübertragungselements (102) verbunden sind.
13. Vorrichtung nach Ausführungsform 12, wobei die Verbindungselemente (114, 116, 118) an den Haltearm (30) angeformt sind.
14. Vorrichtung nach einer der voranstehenden Ausführungsformen, wobei die Verbindungselemente (114, 116, 118) Deformationen des Haltearms (30) in jeweils zwischen den Verbindungselementen (114, 116, 118) liegenden Deformationsbereichen (82, 84) des Haltearms (30) auf die Befestigungsbereiche (104, 106, 108) des Deformationsübertragungselements (102) übertragen.
15. Vorrichtung nach einer der Ausführungsformen 11 bis 14, wobei jeweils zwischen zwei Verbindungselementen (114, 116, 118) ein Deformationsbereich (82, 84) des Haltearms (30) liegt.
16. Vorrichtung nach einer der voranstehenden Ausführungsformen, wobei der Haltearm (30) mindestens zwei Deformationsbereiche (82, 84) aufweist, deren Deformationen über beiderseits des jeweiligen Deformationsbereichs (82, 84) angeordnete Verbindungselemente (114, 116, 118) auf Befestigungsbereiche (104, 106, 108) des Deformationsübertragungselements (102) übertragen wird, zwischen denen ein deformationsbehafteter Bereich (152, 154, 156) des Deformationsübertragungselements (102) liegt.
17. Vorrichtung nach Ausführungsform 16, wobei die mindestens zwei Deformationsbereiche (82, 84) in einer Erstreckungsrichtung des Haltearms (30) aufeinanderfolgend angeordnet sind.
18. Vorrichtung nach einer der voranstehenden Ausführungsformen, wobei mindestens ein Deformationssensor (172, 174, 176, 178) in einem der deformationsbehafteten Bereiche (152, 154, 156, 158) des Deformationsübertragungselements (102) angeordnet ist.
19. Vorrichtung nach einer der Ausführungsformen 16 bis 18, wobei jeder deformationsbehaftete Bereich (152, 154, 156, 158) mit einem deformationssteifen Bereich (144, 146, 148) des Deformationsübertragungselements (102) verbunden ist und dass die Befestigungsbereiche (104, 106, 108) jeweils in einem deformationssteifen Bereich (144, 146, 148) liegen.
20. Vorrichtung nach Ausführungsform 19, wobei die deformationsbehafteten Bereiche (152, 154, 156, 158) jeweils zwischen zwei deformationssteifen Bereichen (144, 146, 148) angeordnet sind.
21. Vorrichtung nach Ausführungsform 19 oder 20, wobei die deformationssteifen Bereiche (144, 146, 148) und die deformationsbehafteten Bereiche (152, 154, 156, 158) in einer Deformationsrichtung aufeinanderfolgend angeordnet sind.
22. Vorrichtung nach einer der Ausführungsformen 16 bis 21, wobei die deformationsbehafteten Bereiche (152, 154, 156, 158) als Deformationskonzentrationsbereiche ausgebildet sind.
23. Vorrichtung nach einer der voranstehenden Ausführungsformen, wobei das Material des Deformationsübertragungselements (102) außerhalb der deformationsbehafteten Bereiche (152, 154, 156, 158) als deformationssteifes oder deformationsinertes Material ausgebildet ist.
24. Vorrichtung nach einer der voranstehenden Ausführungsformen, wobei das Material des Deformationsübertragungselements (102) in den deformationsbehafteten Bereichen (152, 154, 156, 158) durch eine Formgebung, beispielsweise eine Querschnittsverengung, deformationsgeneigt ist.
25. Vorrichtung nach einer der voranstehenden Ausführungsformen, wobei das Deformationsübertragungselement (102) neben dem jeweiligen deformationsbehafteten Bereich (152, 154, 156, 158) einen deformationsfreien Bereich (192, 194, 196, 198) aufweist, auf welchem mindestens ein Referenzdeformationssensor (182, 184, 186, 188) angeordnet ist.
26. Vorrichtung nach Ausführungsform 25, wobei der jeweilige deformationsfreie Bereich (192, 194, 196, 198) aus demselben Material wie der deformationsbehaftete Bereich (152, 154, 156, 158) ausgebildet ist.
27. Vorrichtung nach Ausführungsform 25 oder 26, wobei der jeweilige deformationsfreie Bereich (192, 194, 196, 198) einseitig mit einem deformationssteifen Bereich (144, 146, 148) des Deformationsübertragungselements (102) verbunden ist.
28. Vorrichtung nach einer der Ausführungsformen 25 bis 27, wobei der deformationsfreie Bereich (192, 194, 196, 198) des Deformationsübertragungselements (102) zungenartig ausgebildet ist.
29. Vorrichtung nach einer der Ausführungsformen 25 bis 28, wobei der deformationsfreie Bereich (192, 194, 196, 198) des Deformationsübertragungselements (102) aus demselben Material, insbesondere mit derselben Materialdicke, hergestellt ist, wie der deformationsbehaftete Bereich (152, 154, 156, 158).
30. Vorrichtung nach einer der Ausführungsformen 25 bis 29, wobei die Referenzdeformationssensoren (182, 184, 186, 188) thermisch mit dem Deformationsübertragungselement (102) gekoppelt sind.
31. Vorrichtung nach Ausführungsform 30, wobei die Referenzdeformationssensoren (182, 184, 186, 188) mittels des Deformationsübertragungselements (102) thermisch mit den Deformationssensoren (172, 174, 176, 178) gekoppelt sind.
32. Vorrichtung nach Ausführungsform 31, wobei zur optimalen thermischen Kopplung zwischen dem jeweiligen Deformationssensor (172, 174, 176, 178) und dem diesem zugeordneten Referenzdeformationssensor (182, 184, 186, 188) jeder mit einem Deformationssensor (172, 174, 176, 178) versehene deformationsbehaftete Bereich (152, 154, 156, 158) thermisch mit dem diesem zugeordneten und den zugeordneten Referenzdeformationssensor (182, 184, 186, 188) tragenden deformationsfreien Bereich (192, 194, 196, 198) gekoppelt ist.
33. Vorrichtung nach einer der Ausführungsformen 25 bis 32, wobei der den jeweiligen Referenzdeformationssensor (182, 184, 186, 188) tragende deformationsfreie Bereich (192, 194, 196, 198) dasselbe thermische Verhalten wie der den entsprechenden Deformationssensor (172, 174, 176, 178) tragende deformationsbehaftete Bereich (152, 154, 156, 158) aufweist.
34. Vorrichtung nach einer der Ausführungsformen 25 bis 33, wobei der jeweilige den Referenzdeformationssensor (182, 184, 186, 188) tragende deformationsfreie Bereich (192, 194, 196, 198) eine geometrische Form aufweist, die mit dem den Deformationssensor (172, 174, 176, 178) tragenden deformationsbehafteten Bereich (152, 154, 156, 158) vergleichbar ist.
35. Vorrichtung nach einer der Ausführungsformen 25 bis 34, wobei der deformationsfreie Bereich (192, 194, 196, 198) des Deformationsübertragungselements (102) aus demselben Material hergestellt ist wie der deformationsbehaftete Bereich (152, 154, 156, 158) des Deformationsübertragungselements (102).
36. Vorrichtung nach einer der Ausführungsformen 25 bis 35, wobei den Referenzdeformationssensoren (182, 184, 186, 188) mindestens ein Temperatursensor (252, 254, 256, 258) zur Funktionsüberwachung zugeordnet ist.
37. Vorrichtung nach einer der voranstehenden Ausführungsformen, wobei das Deformationsübertragungselement (102) plattenähnlich ausgebildet ist und jeder einen Deformationssensor (172, 174, 176, 178) tragende deformationsbehaftete Bereich (152, 154, 156, 158) durch eine Querschnittseinschnürung des Deformationsübertragungselements (102) gebildet ist.
38. Vorrichtung nach Ausführungsform 37, wobei die Querschnittseinschnürung des Deformationsübertragungselements (102) durch eine Einschnürung einer Flächenausdehnung des Deformationsübertragungselements (102) gebildet ist.
39. Vorrichtung nach einer der voranstehenden Ausführungsformen, wobei die Deformationssensoren und die Referenzdeformationssensoren als Dehnungssensoren, insbesondere Dehnungsmessstreifen, ausgebildet sind.
40. Vorrichtung nach einer der Ausführungsformen 1 bis 38, wobei die Deformationssensoren und die Referenzdeformationssensoren als magnetostriktive oder optische Sensoren ausgebildet sind.
41. Vorrichtung nach dem Oberbegriff der Ausführungsform 1 oder nach einer der voranstehenden Ausführungsformen, wobei der Haltearm (30) zwischen dem ersten Ende (32) und dem zweiten Ende (34) einen ersten Deformationsbereich (82) und einen zweiten Deformationsbereich (84) aufweist, die bei einer parallel zur Fahrtrichtung (24) in der Längsmittelebene (18) des Haltearms (30) wirkenden Kraft (Fx) jeweils Deformationen erfahren, die sich von den Deformationen bei einer in der Längsmittelebene (18) quer zur Fahrtrichtung (24) wirkenden Kraft (F_{z}) unterscheiden.
42. Vorrichtung nach Ausführungsform 41, wobei der erste und der zweite Deformationsbereich (82, 84) bei einer quer insbesondere senkrecht zur Längsmittelebene (18) wirkenden Kraft (F_{y}) jeweils Deformationen erfahren, die sich von den Deformationen bei einer in der Längsmittelebene (18) parallel und/oder quer zur Fahrtrichtung (24) wirkenden Kraft Fₓ, F2) unterscheiden.
43. Vorrichtung nach Ausführungsform 41 oder 42, wobei der erste und der zweite Deformationsbereich (82, 84) in Erstreckungsrichtung des Haltearms (30) aufeinanderfolgend angeordnet sind.
44. Vorrichtung nach einer der voranstehenden Ausführungsformen, wobei jeder Deformationssensor (172, 174, 176, 178) mit dem zugeordneten Referenzdeformationssensor (182, 184, 186, 188) in einer Wheatstone-Brücke (212, 214, 216, 218) verschaltet ist.
45. Vorrichtung nach einer der voranstehenden Ausführungsformen, wobei die Auswerteeinheit (230) einen Prozessor (234) aufweist, welcher die den Deformationen in dem deformationsbehafteten Bereichen (152, 154, 156, 158) entsprechenden Werte mit durch eine Kalibrierung in einem Speicher (236) ermittelten und gespeicherten Transformationswerten in die entsprechenden Werten (WFₓ, WF_{y}, WF_{z}) von drei quer, insbesondere senkrecht, zueinander verlaufenden Raumrichtungen wirkenden Kräften (Fₓ, F_{y}, F₂) auf das Ankuppelelement (40) umrechnet.
46. Vorrichtung nach einer der voranstehenden Ausführungsformen, wobei zwei der Kräfte (Fₓ, F_{Z}) parallel zu insbesondere in, der Längsmittelebene (18) des Haltearms (30) jedoch quer, insbesondere senkrecht, zueinander verlaufen und dass die dritte Kraft (F_{y}) quer, insbesondere senkrecht, zur Längsmittelebene (18) des Haltearms (30) verläuft.
47. Vorrichtung nach Ausführungsform 45 oder 46, wobei in dem Speicher (236) Transformationswerte für in unterschiedlichen Oktanten auf das Ankuppelelement (40) wirkende Kräftekombinationen gespeichert sind.
48. Vorrichtung nach einer der Ausführungsformen 45 bis 47, wobei die Auswerteeinheit (230) Werte von Deformationssensoren (172, 174, 176, 178) und insbesondere Referenzdeformationssensoren (182, 184, 186, 188) zur Ermittlung der Deformationen erfasst.
49. Vorrichtung nach Ausführungsform 48, wobei die Auswerteeinheit (230) Werte von mindestens einem Temperatursensor (252, 254, 256, 258) zur Funktionsprüfung der Referenzdeformationssensoren (182, 184, 186, 188) erfasst.
50. Vorrichtung nach Ausführungsform 49, wobei die Auswerteeinheit (230) Werte von jeweils einem dem jeweiligen Referenzdeformationssensor zugeordneten Temperatursensor erfasst.
51. Vorrichtung nach einer der voranstehenden Ausführungsformen, wobei der Haltearm (30) an seinem zweiten Ende (34) das Ankuppelelement (40) trägt.
52. Vorrichtung nach Ausführungsform 51, wobei der Haltearm (30) und das Ankuppelelement (40) ein zusammenhängendes Teil bilden.
53. Vorrichtung nach Ausführungsform 51 oder 52, wobei der Haltearm (30) als Kugelhals ausgebildet ist und an dem zweiten Ende (34) das eine Kupplungskugel (43) umfassende Ankuppelelement (40) trägt.
54. Vorrichtung nach einer der Ausführungsformen 1 bis 50, wobei der Haltearm (30') einen Aufnahmekörper (31') umfasst, der zur lösbaren Aufnahme des Ankuppelelements (40') ausgebildet ist.
55. Vorrichtung nach Ausführungsform 54, wobei der Aufnahmekörper (31') eine Einsteckaufnahme (33') aufweist, welche durch eine Einstecköffnung (35') zugänglich ist.
56. Vorrichtung nach Ausführungsform 54 oder 55, wobei das Ankuppelelement (40') einen Trägerarm (42') umfasst.
57. Vorrichtung nach einer der Ausführungsformen 54 bis 56, wobei der Trägerarm (42') mit einem Einsteckabschnitt (45') in die Einsteckaufnahme (33') einsteckbar und in dieser fixierbar ist.
58. Vorrichtung nach einer der Ausführungsformen 54 bis 57, wobei der Trägerarm (42') eine Kupplungskugel (43) trägt.
59. Vorrichtung nach Ausführungsform 57 oder 58, wobei der Einsteckabschnitt (45') quer in einer Einsteckrichtung (E) formschlüssig in der Einsteckaufnahme (33') aufgenommen ist und im Funktionszustand in Einsteckrichtung durch einen Formschlusskörper (41) fixiert ist.

Weitere Merkmale und Vorteile der erfindungsgemäßen Lösung sind Gegenstand der nachfolgenden Beschreibung sowie der zeichnerischen Darstellung einiger Ausführungsbeispiele.

In der Zeichnung zeigen:
- Fig. 1: eine teilweise heckseitig aufgebrochene Seitenansicht einer Kraftfahrzeugkarosserie gemäß einem ersten Ausführungsbeispiel einer erfindungsgemäßen Vorrichtung zum Ankuppeln eines Anhängers;
- Fig. 2: eine Heckansicht der Kraftfahrzeugkarosserie mit Blick in Richtung des Pfeils X in Fig. 1;
- Fig. 3: eine Darstellung des ersten Ausführungsbeispiels der Vorrichtung zum Ankuppeln eines Anhängers oder einer Lastenträgereinheit in ihrer Arbeitsstellung entsprechend Fig. 2;
- Fig. 4: eine Darstellung des ersten Ausführungsbeispiels der Vorrichtung zum Ankuppeln eines Anhängers oder einer Lastenträgereinheit in einer Ruhestellung R;
- Fig. 5: eine Seitenansicht des Haltearms des ersten Ausführungsbeispiels mit Darstellung der Belastung des Ankuppelelements mit einer Kraft Fₓ;
- Fig. 6: eine Draufsicht auf den Haltearm mit Blick in Richtung des Pfeils D in Fig. 5;
- Fig. 7: eine Seitenansicht des Haltearms bei Einwirkung einer Kraft F_{z};
- Fig. 8: eine Draufsicht auf den Haltearm entsprechend Fig. 6 bei Einwirkung der Kraft F_{z};
- Fig. 9: eine Seitenansicht eines Haltearms bei Einwirkung einer Kraft F_{y};
- Fig. 10: eine Draufsicht ähnlich Fig. 6 bei Einwirkung der Kraft F_{y};
- Fig. 11: einen Schnitt längs Linie 11-11 in Fig. 5;
- Fig. 12: eine vergrößerte Draufsicht auf den Haltearm mit dem Deformationsübertragungselement bei Einwirkung der Kraft Fₓ gemäß Fig. 5 und 6;
- Fig. 13: eine Draufsicht entsprechend Fig. 12 bei Einwirkung der Kraft F_{z} gemäß Fig. 7 und 8;
- Fig. 14: eine Draufsicht ähnlich Fig. 12 bei Einwirkung einer Kraft F_{y} entsprechend Fig.9 und 10;
- Fig. 15: eine vergrößerte Draufsicht auf das Deformationsübertragungselement gemäß einem ersten Ausführungsbeispiel mit den auf diesem angeordneten Deformationssensoren und Referenzdeformationssensoren;
- Fig. 16: eine Darstellung einer Wheatstone-Brücke zur Verschaltung eines ersten Deformationssensors und eines ersten Referenzdeformationssensors;
- Fig. 17: eine Darstellung der Wheatstone-Brücke entsprechend Fig. 16 zur Verschaltung eines zweiten Deformationssensors und eines zweiten Referenzdeformationssensors;
- Fig. 18: eine Darstellung einer Wheatstone-Brücke entsprechend Fig. 16 zur Verschaltung eines dritten Deformationssensors und eines dritten Referenzdeformationssensors;
- Fig. 19: eine Darstellung einer Wheatstone-Brücke entsprechend Fig. 16 zur Verschaltung eines vierten Deformationssensors und eines vierten Referenzdeformationssensors;
- Fig. 20: eine Darstellung einer Auswerteschaltung zur Verarbeitung der in den Wheatstone-Brücken gemäß Fig. 16 bis Fig. 19 gemessenen Spannungen;
- Fig. 21: eine Darstellung eines Ankuppelelements 40 und der durch die Auswerteschaltung ermittelten, auf das Ankuppelelement 40 wirkenden Kräfte;
- Fig. 22: eine Darstellung einer Seitenansicht des ersten Ausführungsbeispiels mit der Darstellung einer die Auswerteschaltung tragenden Schaltungsplatine;
- Fig. 23: eine Darstellung einer Einheit aus die Auswerteschaltung tragender Schaltungsplatine und das Deformationsübertragungselement mit Deformationssensoren und Referenzdeformationssensoren in Seitenansicht;
- Fig. 24: eine Darstellung eines zweiten Ausführungsbeispiels einer erfindungsgemäßen Vorrichtung mit umgekehrter Anordnung der Einheit umfassend das Deformationsübertragungselement, die Dehnungssensoren, die Referenzdehnungssensoren und die Auswerteeinheit;
- Fig. 25: eine Darstellung eines dritten Ausführungsbeispiels einer erfindungsgemäßen Vorrichtung ähnlich Fig. 23 mit Darstellung der zusätzlichen auf der Platine angeordneten Temperatursensoren;
- Fig. 26: eine Darstellung eines vierten Ausführungsbeispiels einer erfindungsgemäßen Vorrichtung mit Darstellung des Deformationsübertragungselements und zusätzlichen auf diesem angeordneten Temperatursensoren;
- Fig. 27: eine Darstellung der Auswerteeinheit gemäß dem dritten oder vierten Ausführungsbeispiel ähnlich Fig. 20;
- Fig. 28: eine Seitenansicht ähnlich Fig. 1 eines fünften Ausführungsbeispiels einer erfindungsgemäßen Vorrichtung;
- Fig. 29: eine perspektivische Darstellung des fünften Ausführungsbeispiels der erfindungsgemäßen Vorrichtung in Arbeitsstellung;
- Fig. 30: eine Ansicht des fünften Ausführungsbeispiels mit Blick in Richtung des Pfeils X' in Fig. 28 in Arbeitsstellung;
- Fig. 31: einen Schnitt längs Linie 31-31 in Fig. 30;
- Fig. 32: einen Schnitt längs Linie 32-32 in Fig. 30;
- Fig. 33: einen Schnitt ähnlich Fig. 31 des Ausführungsbeispiels in der Ruhestellung;
- Fig. 34: eine perspektivische Darstellung des fünften Ausführungsbeispiels in der Ruhestellung mit Blick in Richtung des Pfeils Y' in Fig. 33;
- Fig. 35: eine Seitenansicht des Haltearms des fünften Ausführungsbeispiels mit Darstellung der Belastung des Ankuppelelements mit einer Kraft Fₓ;
- Fig. 36: eine Draufsicht auf den Haltearm mit Blick in Richtung des Pfeils D' in Fig. 35;
- Fig. 37: eine Seitenansicht des Haltearms des fünften Ausführungsbeispiels bei Einwirkung einer Kraft F_{z};
- Fig. 38: eine Draufsicht auf den Haltearm entsprechend Fig. 36 bei Einwirkung der Kraft F_{z};
- Fig. 39: eine Seitenansicht eines Haltearms des fünften Ausführungsbeispiels bei Einwirkung einer Kraft F_{y} und
- Fig. 40: eine Draufsicht ähnlich Fig. 36 bei Einwirkung der Kraft F_{y};

Ein als Ganzes mit 10 bezeichnetes Kraftfahrzeug umfasst eine Kraftfahrzeugkarosserie 12, welche an einem Heckbereich 14, und zwar nahe eines Fahrzeugbodens 16, mit einer Trägereinheit 20 versehen ist, die beispielsweise einen Querträger 22 aufweist, der mit dem Heckbereich 14 nahe des Fahrzeugbodens 16 verbunden ist.

Die Verbindung zwischen dem Querträger 22 und dem Heckbereich 14 kann beispielsweise über an dem Heckbereich 14 anliegende Montageflansche erfolgen oder beispielsweise durch sich in einer Fahrzeuglängsrichtung 24 erstreckende Seitenträger 26, die an sich ebenfalls in der Fahrzeuglängsrichtung 24 erstreckenden Fahrzeugkarosserieabschnitten 28 anliegen.

Mit der Trägereinheit 20 ist ein als Ganzes mit 30 bezeichneter Haltearm, insbesondere ein Kugelhals, dadurch verbunden, dass ein erstes Ende 32 des Haltearms 30 entweder unmittelbar oder über eine Lagereinheit 36 an der Trägereinheit 20, vorzugsweise an dem Querträger 22, gehalten ist.

Der Haltearm 30 trägt an einem dem ersten Ende 32 gegenüberliegenden zweiten Ende 34 ein Ankuppelelement 40, welches beispielsweise zum Anhängen eines Anhängers oder zum Fixieren einer Lastenträgereinheit vorgesehen ist.

Beispielsweise ist ein derartiges Ankuppelelement 40 als Kupplungskugel 43 ausgebildet, welche eine vielfach übliche Verbindung mit einer Zugkugelkupplung eines Anhängers erlaubt.

Die Kupplungskugel 43 erlaubt aber auch eine einfache Montage einer Lastenträgereinheit, da vielfach gebräuchliche Lastenträgereinheiten ebenfalls so ausgebildet sind, dass sie an einer Kupplungskugel montierbar und gegebenenfalls noch zusätzlich an dem Haltearm 30 abstützbar sind.

Das Ankuppelelement 40 sitzt beispielsweise auf einem Träger 42 der mit dem zweiten Endbereich 34 des Haltearms 30 verbunden ist und erstreckt sich ausgehend von einer einer Fahrbahn 44 abgewandten Seite des Trägers 42 in Richtung einer bei horizontaler Fahrbahn 44 ungefähr vertikal verlaufenden Mittelachse 46, die im Fall der Kupplungskugel 43 durch einen Kugelmittelpunkt 48 hindurch verläuft.

Zur Verbesserung der ästhetischen Wirkung ist vorzugsweise der Querträger 22 unter einer heckseitigen Stoßfängereinheit 50 der Kraftfahrzeugkarosserie 12 angeordnet, wobei die Stoßfängereinheit 50 beispielsweise den Querträger 22 und das erste Ende 32 des Haltearms 30 verdeckt.

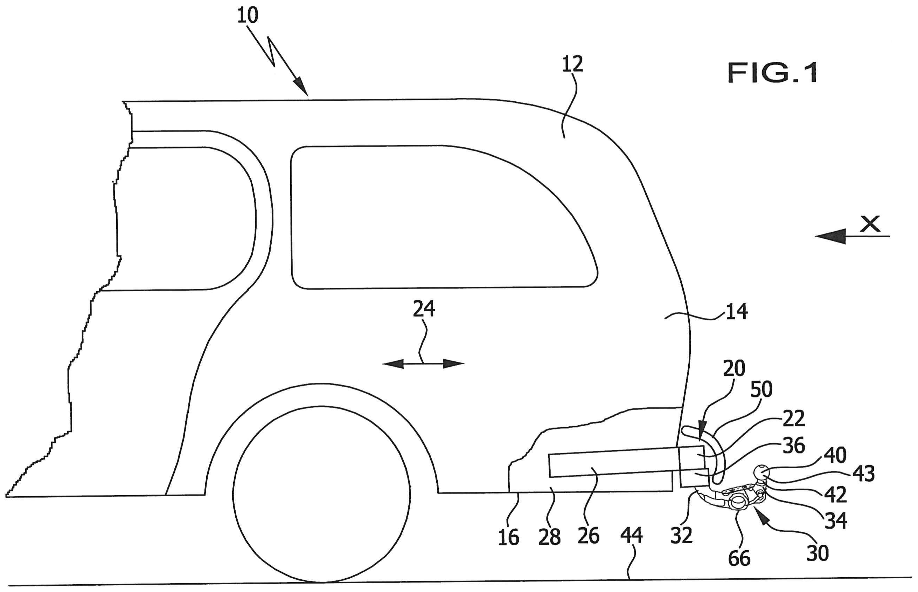

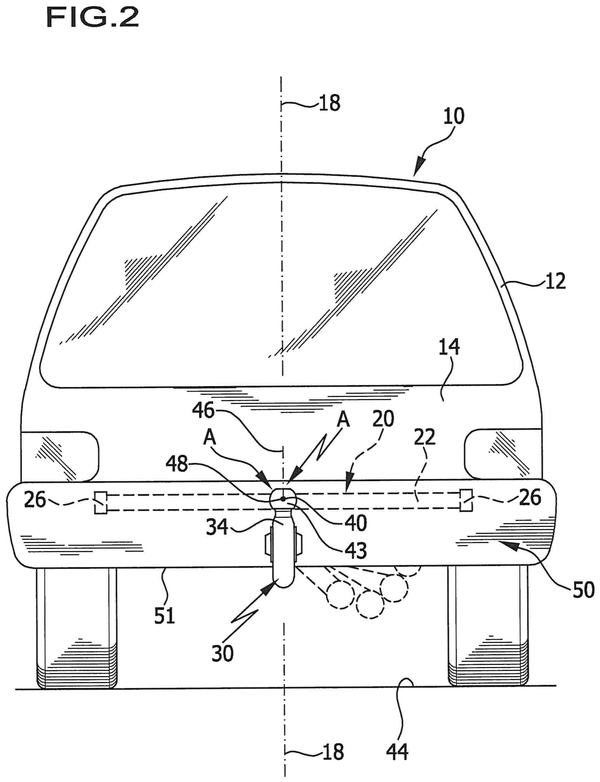

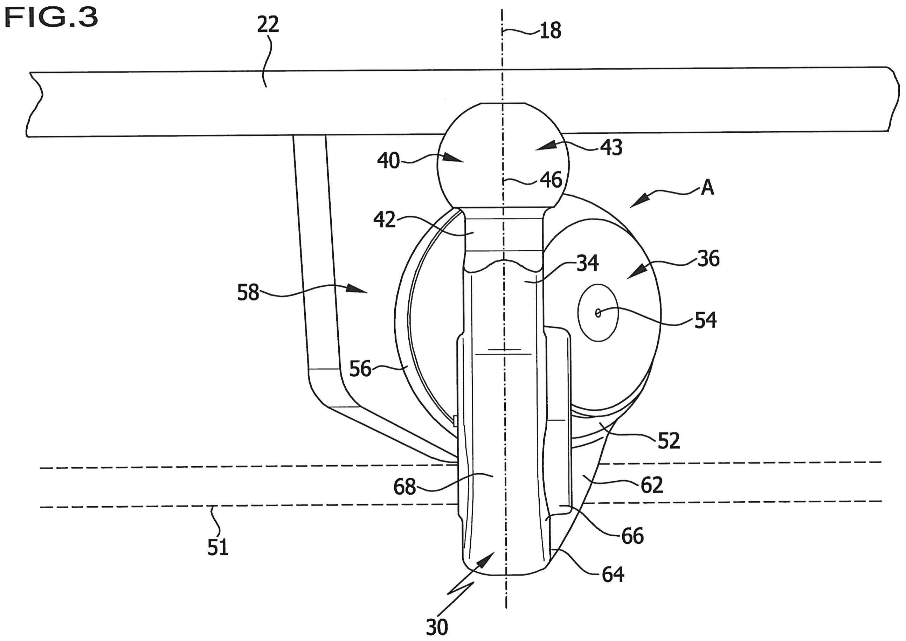

Der Haltearm 30 trägt insbesondere bei dem dargestellten Ausführungsbeispiel das als Kupplungskugel ausgebildete Ankuppelelement 40, wobei sich der Haltearm 30, wie insbesondere in den Fig. 1 bis 3 dargestellt, ausgehend von der Schwenklagereinheit 36 erstreckt, mit welcher der Haltearm 30 an seinem ersten Endbereich 32 verbunden ist, wobei beispielsweise an dem ersten Endbereich 32 ein Schwenklagerkörper 52 der Schwenklagereinheit 36 angeformt ist.

Der Schwenklagerkörper 52 der Schwenklagereinheit 36 ist um eine insbesondere Schräg zu einer vertikalen Fahrzeuglängsmittelebene 18 verlaufende Schwenkachse 54 verschwenkbar an einer Schwenklageraufnahme 56 gelagert, die einerseits den Schwenklagerkörper 52 um die Schwenkachse 54 drehbar führt und andererseits eine zeichnerisch nicht dargestellte Verriegelungseinheit umfasst, die in der Arbeitsstellung und der Ruhestellung eine drehfeste Festlegung des Haltearms 30 gegenüber Schwenkbewegungen um die Schwenkachse 54 ermöglicht.

Die Schwenklageraufnahme 56 ist dann ihrerseits wiederum über eine Schwenklagerbasis 58 mit dem Querträger 22 fest verbunden.

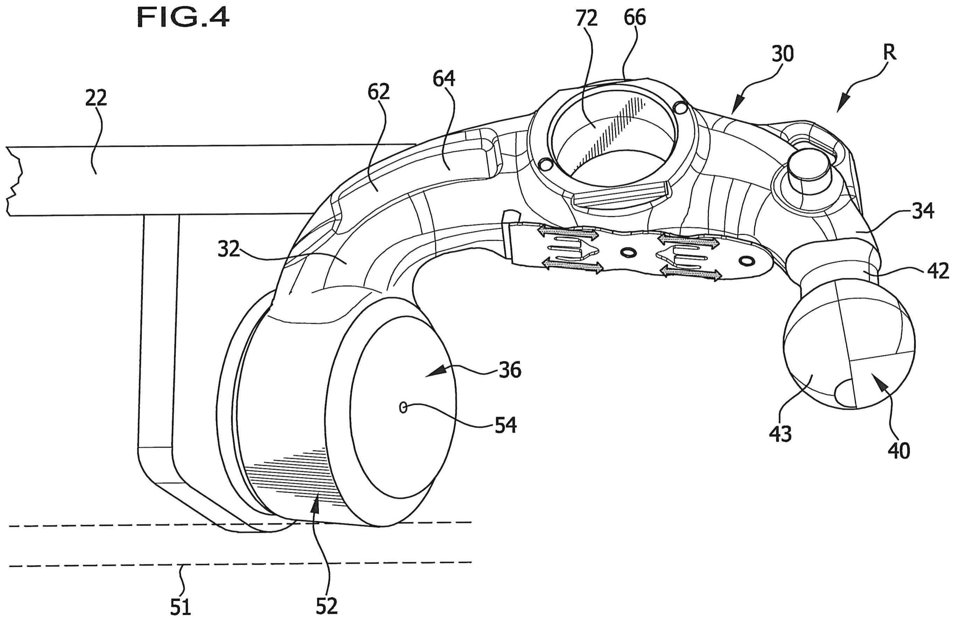

Wie in Fig. 1 bis 4 dargestellt, ist der Haltearm 30 bei diesem Ausführungsbeispiel von einer Arbeitsstellung A, dargestellt in Fig. 1 bis 3, in welcher das als Kupplungskugel 40 ausgebildete Ankuppelelement so steht, dass dieses hinter der Stoßfängereinheit 50 auf einem einer Fahrbahn 44 abgewandten Seite steht, in eine Ruhestellung R, dargestellt in Fig. 4, verschwenkbar ist, in welcher das Ankuppelelement 40 der Fahrbahn 44 zugewandt angeordnet ist.

Dabei ist das Ankuppelelement 40 unter einer Unterkante 51 der Stoßfängereinheit 50 hindurch bewegbar.

Insbesondere erstreckt sich dabei der Haltearm 30 in der Arbeitsstellung A im Wesentlichen in der vertikalen Fahrzeuglängsmittelebene 18, wobei diese das Ankuppelelement 40 im Fall einer Ausbildung desselben als Kupplungskugel mittig schneidet, so dass in der Arbeitsstellung A eine vertikale Kugelmittelachse 48 in der Längsmittelebene 18 liegt.

Ausgehend von dem ersten Endbereich 32 erstreckt sich der Haltearm 30 bei dem dargestellten Ausführungsbeispiel mit einem ersten Bogenstück 62 bis zu einem Zwischenstück 64, welches sich bis zu einem Ringkörper 66 erstreckt, an welchen sich auf einer dem Zwischenstück 64 und dem Bogenstück 62 gegenüberliegende Seite ein zweites Bogenstück 68 anschließt, das seinerseits das als Kupplungskugel ausgebildeten Ankuppelelement 40 trägt, wobei zwischen dem als Kupplungskugel ausgebildete Ankuppelelement 40 und dem zweiten Bogenstück 148 noch der Kugelansatz 42 vorgesehen ist.

Das zweite Bogenstück 68 bildet dann den Endbereich 34 des Haltearms 30 der dann beispielsweise den Kugelansatz 42 trägt, an den sich das als Kupplungskugel ausgebildete Ankuppelelement 40 anschließt.

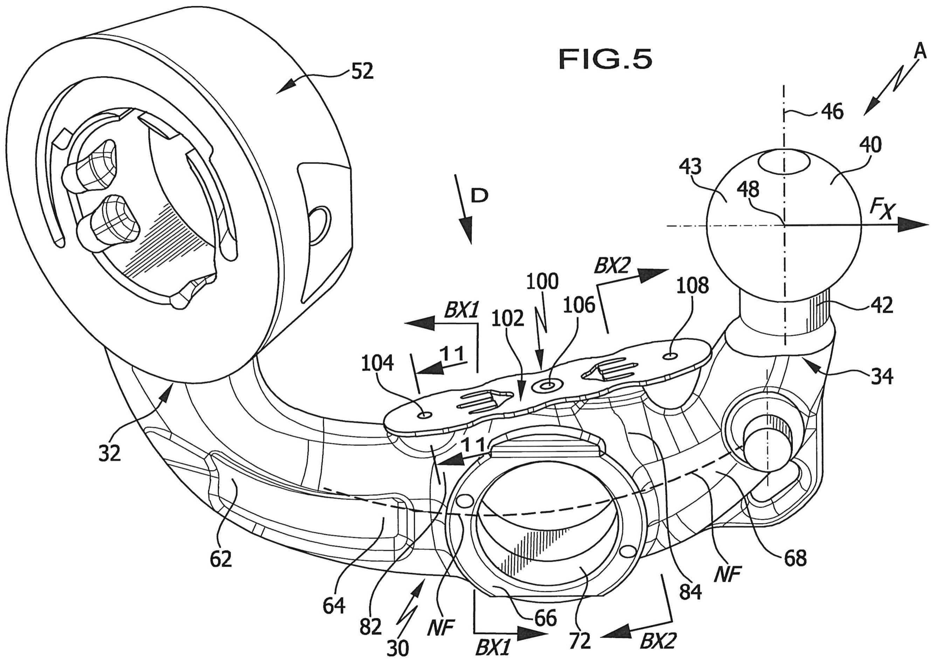

Wie insbesondere in Fig. 4 und 5 dargestellt, ist zur einfachen Montage einer Kontakteinheit an dem Haltearm 30 im Anschluss an das Zwischenstück 64 der Ringkörper 66 angeordnet, der einen Durchlass 72 umschließt, in welchem eine Kontakteinheit montierbar ist.

Vorzugsweise ist dabei der Ringkörper 66 derart angeordnet, dass im Anschluss an den Ringkörper 66 ein Übergang in das zweite Bogenstück 68 erfolgt.

Ein derart ausgebildeter Haltearm 30 ist durch das erste Bogenstück 62, das Zwischenstück 64 und das zweite Bogenstück 68 näherungsweise U-förmig ausgebildet, und in der Arbeitsstellung A, in welcher Belastungen des Ankuppelelements 40 auftreten und erfasst werden sollen, so ausgerichtet, dass die Kräfte, welche auf das Ankuppelelement 40, insbesondere den Kugelmittelpunkt 46, wirken über die näherungsweise U-förmige Ausbildung des Haltearms 30 auf den Schwenklagerkörper 52 der Schwenklagereinheit 36 übertragen werden, wobei die Schwenkachse 54 einen Mittelpunkt der Kraftaufnahme durch die Schwenklagereinheit 36 darstellt.

Die auf das Ankuppelelement 40 einwirkenden Kräfte, werden wir in den Fig. 1 bis 8 durch den Haltearm 30 auf die Lagereinheit 36 und von dieser auf die Trägereinheit 20 übertragen, die diese die Kräfte dann in den Heckbereich 14 der Kraftfahrzeugkarosserie 12 einleitet, wobei zur Erfassung der auf das Ankuppelelement 40 wirkenden Kräfte unterschiedliche Bereiche des Haltearms 30 herangezogen werden.

Im vorstehend beschriebenen Ausführungsbeispiel wird exemplarisch ein erster Deformationsbereich 82 des Haltearms 30 herangezogen, der einen Abschnitt des Zwischenstücks 64 und des Ringkörpers 66 umfasst und ein zweiter Deformationsbereich des Haltearms 30 herangezogen, der einen Abschnitt des Ringkörpers 66 und des zweiten Bogenstücks 68 umfasst.

Ferner wird bei diesem Ausführungsbeispiel davon ausgegangen, dass der Ringbereich 66 eine hohe Stabilität gegenüber in der Längsmittelebene 18 und auch quer zu dieser verlaufende Biegekräfte aufweist, und insbesondere primär auf Zugbelastungen reagiert.

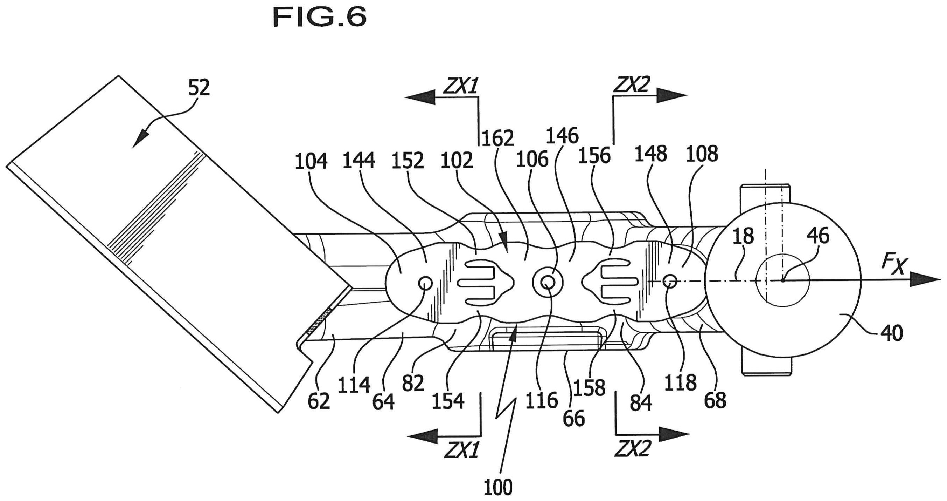

So führt beispielsweise die in Fig. 5 und 6 dargestellte Kraft Fₓ, die in der Längsmittelebene 18 und senkrecht zur Mittelachse 46 sowie von dem Schwenklagerkörper 52 weg gerichtet ist, dazu, dass in den Deformationsbereichen 82 und 84 einerseits Zugkräfte ZX1 und ZX2 (Fig. 6) auftreten und andererseits auch noch Biegekräfte BX1 und BX2 (Fig. 5), die diesen Zugbelastungen ZX1 und ZX2 überlagert sind, wobei diese Kräfte in Richtung der Längsmittelebene 18, insbesondere in der Längsmittelebene 18, des Haltearms 30 wirken.

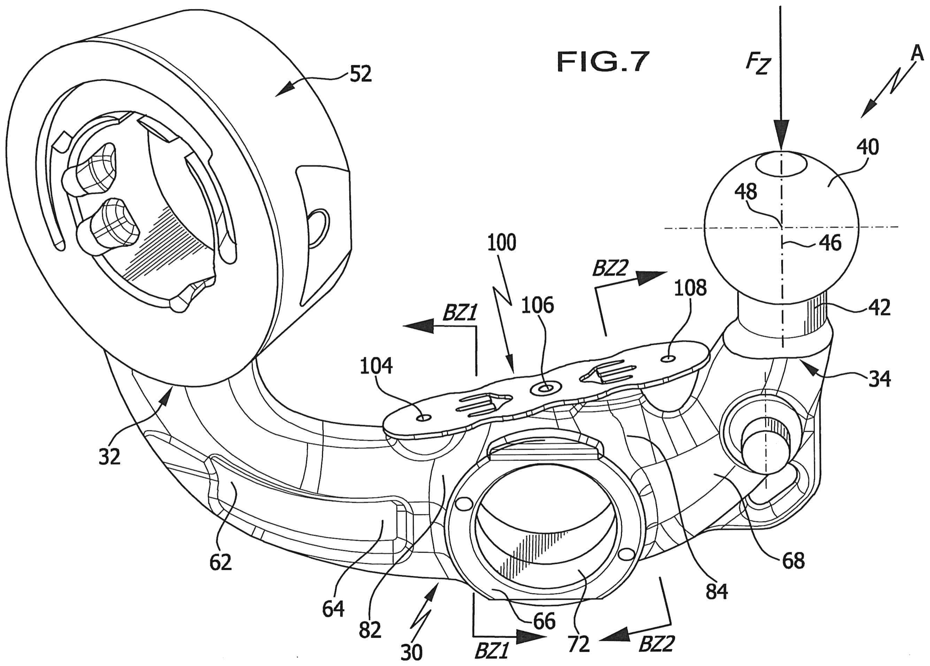

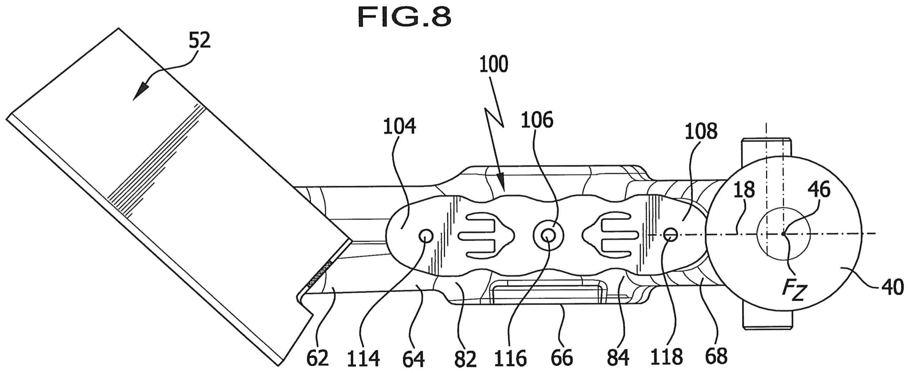

Ferner treten in den Deformationsbereichen 82 und 84, wie in Fig. 7 und 8 dargestellt, bei einer Belastung des Ankuppelelements 40 mit einer Kraft F_{z}, die in Richtung der Mittelachse 46 wirkt, in den Deformationsbereichen 82 und 84 im Wesentlichen Biegekräfte BZ1 und BZ2 auf, wobei diese Kräfte in Richtung der Längsmittelebene 18, insbesondere in der Längsmittelebene 18, des Haltearms 30 wirken, die somit bezogen auf eine sogenannte längeninvariable neutrale Faser NF auf einander gegenüberliegenden Seiten einander entgegengesetzte Wirkungen haben.

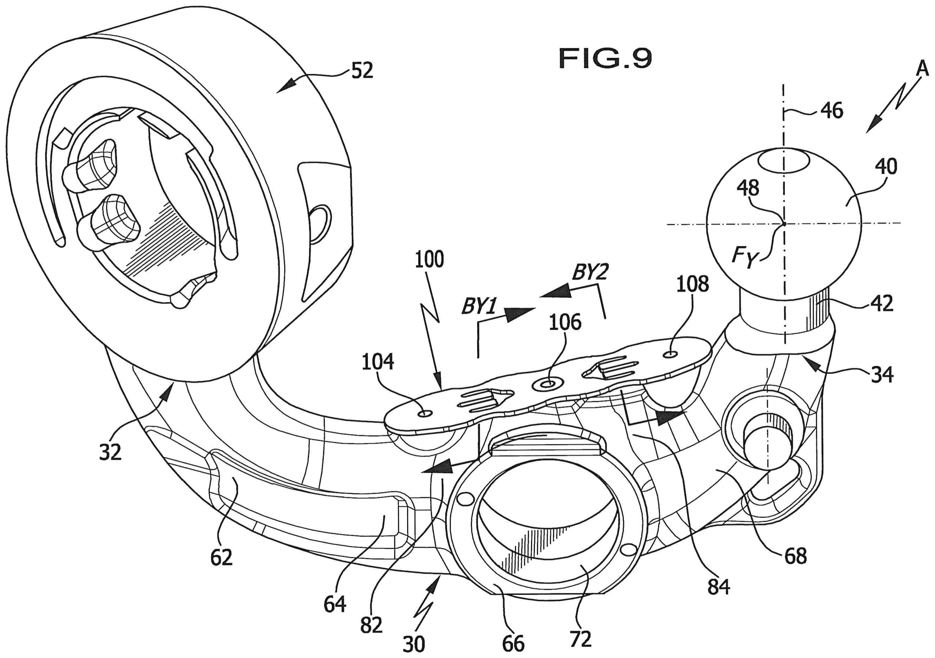

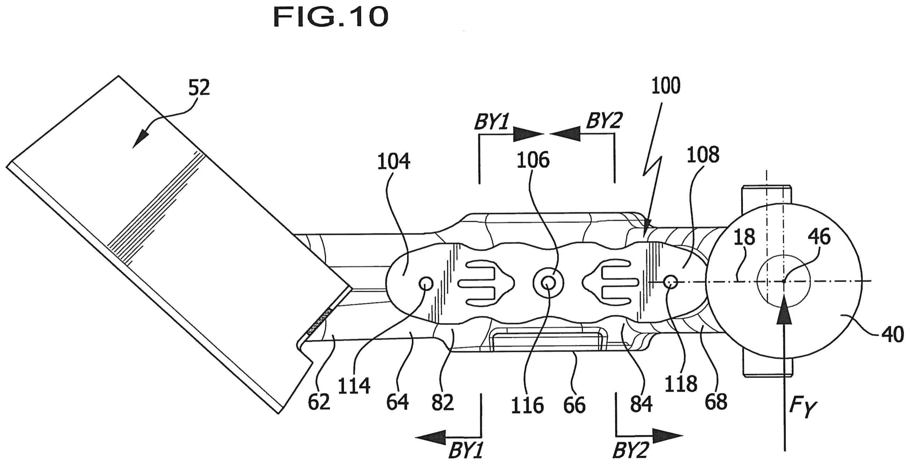

Außerdem führt eine auf das Ankuppelelement 40 einwirkende Kraft F_{y}, die senkrecht zur Längsmittelebene 18 und senkrecht zur Mittelachse 46 gerichtet ist, wie in Fig. 9 und 10 dargestellt, zu auf beiderseits der Längsmittelebene 18 jedoch auf unterschiedlichen Seiten derselben entgegengesetzt zueinander wirkenden Biegekräften BY1 und BY2.

Zur Erfassung dieser Zugkräfte ZX1 und ZX2 sowie der Biegekräfte BX1 und BX2, BZ1 und BZ2 sowie BY1 und BY2 ist an dem Haltearm 30 ein als Ganzes mit 100 bezeichnetes Krafterfassungsmodul angeordnet.

Dieses Krafterfassungsmodul 100 umfasst ein Deformationsübertragungselement 102, welches an drei Befestigungsbereichen 104, 106 und 108 mit dem Haltearm 30 starr verbunden ist, wobei der Befestigungsbereich 104 auf einer dem ersten Ende 32 zugewandten Seite liegt und starr mit einem, beispielsweise an dem Mittelstück 64 sitzenden, Ansatz 114 des Haltearms 30 verbunden ist, der Befestigungsbereich 106 ungefähr mittig zwischen den Befestigungsbereichen 104 und 108 angeordnet ist und beispielsweise mit einem auf dem Ringkörper 66 insbesondere mittig desselben sitzenden Halteansatz 116 verbunden ist und der Befestigungsbereich 108 mit einem an dem Bogenstück 68, beispielsweise in einem mittigen Bereich des Bogenstücks 68 zwischen dem Ringkörper 66 und dem Ende 34 angeordneten, Ansatz 118 des Haltearms 30 verbunden ist.

Die Verbindung zwischen den jeweiligen Verbindungselementen 114, 116 und 118 des Haltearms 30 erfolgt dabei starr und spielfrei, vorzugsweise durch eine Schweißung oder eine Klebung, die keinerlei Bewegungselastizität zwischen dem Deformationsübertragungselement 102 und den Verbindungselementen 114, 116 und 118 zulassen.

Vorzugsweise sind die Verbindungselemente 114, 116 und 118 ebenfalls starr mit dem Haltearm verbunden, insbesondere an diesem angeformt.

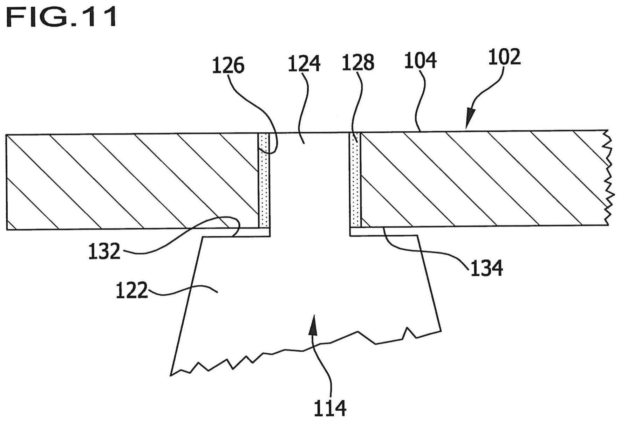

Vorzugsweise sind, wie in Fig. 11 exemplarisch am Beispiel des Ansatzes 114 dargestellt, die Verbindungselemente 114, 116 und 118 des Haltearms 30 so ausgebildet, dass diese einen Fußbereich 122 aufweisen, der sich ausgehend von dem Haltearm 30 erstreckt und einen Fixierzapfen 124 bildet, welcher einen Durchbruch 126 durchsetzt, der in dem jeweiligen Befestigungsbereich, in diesem Fall dem Befestigungsbereich 104 des Deformationsübertragungselements 102, angeordnet ist.

Vorzugsweise sind der Fixierzapfen 124 und der Durchbruch 126 derart formangepasst, dass diese durch eine Schweißnaht 128 miteinander starr verbindbar sind.

Darüber hinaus ist vorzugsweise der Fußbereich 122 noch so ausgebildet, dass dieser eine um den Fixierzapfen 124 umlaufende Schulter 132 aufweist, auf welcher das Deformationsübertragungselement 102 mit einer den Durchbruch 126 umschließenden Auflagefläche 134 des Befestigungsbereichs 104 aufliegt und dadurch beispielsweise beim Anbringen der Schweißnaht 128 abgestützt ist.

Das Deformationsübertragungselement 102 ist ferner so ausgebildet, dass dieses deformationssteife Bereiche 144, 146 und 148 aufweist, die insbesondere die Befestigungsbereiche 104 mit umfassen, und dass zwischen den deformationssteifen Bereichen 144, 146, 148 jeweils deformationsbehaftete Bereiche 152, 154, 156, 158 angeordnet sind, wobei beispielsweise zwischen den deformationssteifen Bereichen 144 und 146 die deformationsbehafteten Bereiche 152 und 154 liegen, die vorzugsweise im selben Abstand von der Längsmittelebene 18, jedoch auf gegenüberliegenden Seiten derselben, angeordnet sind und zwischen den deformationssteifen Bereichen 146 und 148 die deformationsbehafteten Bereiche 156 und 158 liegen, die ebenfalls auf jeweils gegenüberliegenden Seiten der Längsmittelebene 18 jedoch vorzugsweise im selben Abstand von dieser angeordnet sind.

Vorzugsweise sind dabei die deformationsbehafteten Bereiche 152 bis 158 als Deformationskonzentrationsbereiche ausgebildet, das heißt, dass in diesen Deformationskonzentrationsbereichen 152, 154, 156, 158 sich eine auf das Deformationsübertragungselement 102 einwirkende Deformation wesentlich stärker auswirkt, als in den deformationssteifen Bereichen 144, 146 und 148.

Die Ausbildung eines derartigen Deformationskonzentrationsbereichs lässt sich im einfachsten Fall dadurch realisieren, dass das Material in den Deformationskonzentrationsbereichen 152 bis 158 eine geringere Steifigkeit aufweist als in den deformationssteifen Bereichen 144, 146 und 148.

Eine derartige Variation der Steifigkeit kann beispielsweise durch Veränderung des Materials im Bereich der Deformationskonzentrationsbereiche 152, 154, 156, 158 erreicht werden oder auch durch eine Änderung des wirksamenden Materialquerschnitts.

In den dargestellten Ausführungsbeispielen gemäß den Fig. 6, 8 und 10 werden die Deformationskonzentrationsbereiche 152, 154, 156 und 158 als schmale Stege einer das Deformationsübertragungselement 102 bildenden Platte 162 ausgebildet, während die deformationssteifen Bereiche 144, 146 und 148 durch sich breit ausdehnende Bereiche der Platte 162 gebildet werden.

Eine derartige Ausbildung des Deformationsübertragungselements 102 hat zusammenfassend die Konsequenz, dass eine Deformation des Deformationsbereichs 82 des Haltearms 30 zu einer Relativbewegung der starr mit dem Haltearm 30 verbundenen Verbindungselemente 114 und 116 führt, die auf die Befestigungsbereiche 104 und 106 und von diesen auf die deformationssteifen Bereiche 144 und 146 des Deformationsübertragungselements 102 übertragen werden, wobei die deformationssteifen Bereiche 144 und 146 des Deformationsübertragungselements 102 im Wesentlichen keine Deformation erfahren und somit die gesamten, sich in dem Deformationsbereich 82 ausbildenden Deformationen auf die deformationsbehafteten Bereiche 152 und 154 übertragen, die dadurch, dass sie auch als Deformationskonzentrationsbereiche ausgebildet sind, die gesamte, sich zwischen den Verbindungselementen 114 und 116 im Deformationsbereich 82 ausbildende Deformation konzentriert erfahren.

Das heißt, dass die Deformationskonzentrationsbereiche 152 und 154 sowohl Deformationen durch die in der Längsmitteleben 18 wirksamen Biegekräfte BX1 als auch Deformationen durch die Zugkräfte ZX1 als auch die durch die Kräfte BZ1 und BZ2 erfolgenden Deformationen erfahren, wobei dadurch, dass diese Deformationen alle auf im Wesentlichen in der Längsmittelebene 18 wirksamen Kräften beruhen beide Deformationskonzentrationsbereiche 152 und 154 dieselbe Deformation erfahren.

Anders ist dies bei den in Fig. 9 und 10 dargestellten Biegekräften BY1, die auf unterschiedlichen Seiten der Längsmittelebene 18 in unterschiedlichen Richtungen wirken, so dass beispielsweise ausgehend von den in Fig. 9 und 10 dargestellten Biegekräften BY1 der Deformationskonzentrationsbereich 152 eine Deformation erfährt, die auf einer Druckbelastung basiert, während der Deformationskonzentrationsbereich 154 eine Deformation erfährt, die auf einer Zugbelastung basiert.

In analoger Weise werden Deformationen des Deformationsbereichs 84 des Haltearms durch die Verbindungselemente 116 und 118 auf die Befestigungsbereiche 106 und 108 übertragen, die Teil der deformationssteifen Bereiche 146 und 148 sind und die somit die Deformationen des Deformationsbereichs 84 auf die deformationsbehafteten Bereiche 156 und 158 übertragen, die ebenfalls als Deformationskonzentrationsbereiche ausgebildet sind und somit die gesamte Deformation des Deformationsbereichs 84 erfahren.

Dies führt ebenfalls dazu, dass die durch die Kräfte BX2, ZX2 und BZ2, die alle im Wesentlichen in der Längsmittelebene 18 wirksam sind, sich in gleicher Weise auf die Deformationskonzentrationsbereiche 156 und 158 auswirken, während die Kräfte BY2 zu entgegengesetzten Deformationen in den Deformationsbereichen 156 und 158 führen, so dass beispielsweise die Deformation im Deformationskonzentrationsbereich 156 auf einer Druckbelastung basiert, während die Deformation im Deformationskonzentrationsbereich 158 auf einer Zugbelastung basiert.

Dadurch, dass die Deformationsbereiche 82 und 84 des Haltearms bei Belastung des Ankuppelelements 40 durch die Kraft Fₓ eine andere Deformation erfahren als bei Belastung des Ankuppelelements 40 durch die Kraft F_{z}, besteht aufgrund der unterschiedlichen Deformation der Deformationsbereiche 82 und 84 die Möglichkeit, anhand der in den Deformationskonzentrationsbereichen 152 und 154 bzw. 156 und 158 auftretenden unterschiedlichen Deformationen zu erkennen, ob eine Kraft Fₓ oder eine Kraft F_{z} auf das Ankuppelelement 40 einwirkt, wie nachfolgend im Einzelnen erläutert wird.

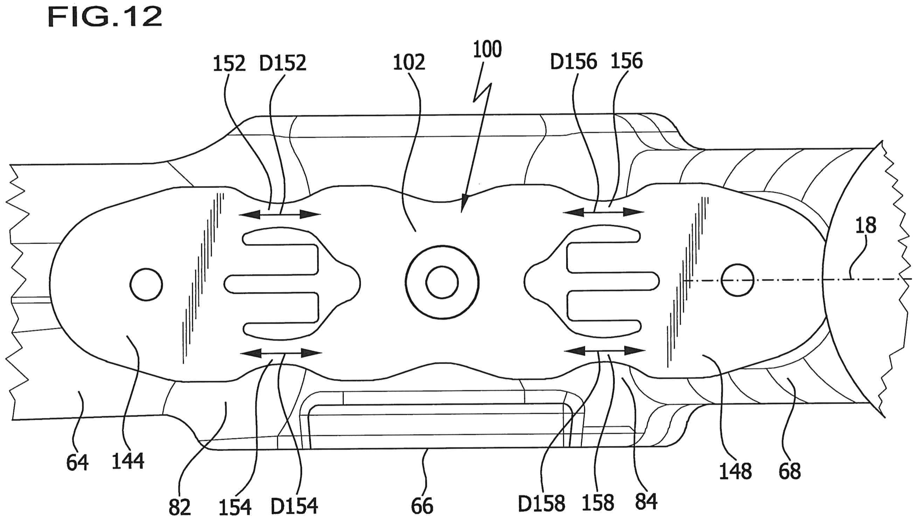

Zur Erläuterung kann hierzu beispielhaft davon ausgegangen werden, dass, wie in Fig. 12 dargestellt, die Deformationen D152 im Deformationskonzentrationsbereich 152, die Deformation D154 im Deformationskonzentrationsbereich 154, die Deformation D156 im Deformationskonzentrationsbereich 156 und die Deformation D158 im Deformationskonzentrationsbereich 158 im Wesentlichen gleich groß sind, wenn sich die Deformationsbereiche 82 und 84 bei den auftretenden Biegekräften BX1 und BX2, kombiniert mit den auftretenden Zugkräften ZX1 und ZX2 im Wesentlichen in gleicher Weise verhalten.

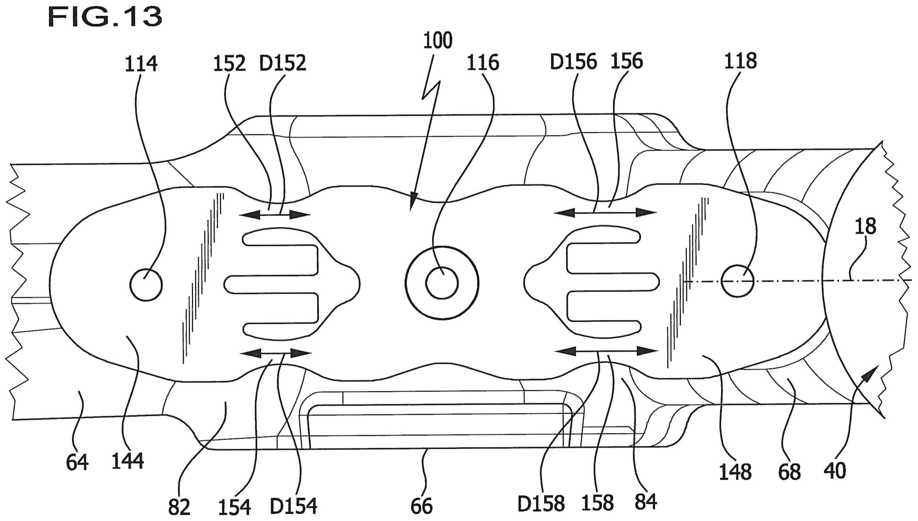

Ferner kann sich das Verhalten der Deformationen in den Deformationsbereichen 82 und 84 bei Auftreten der Kraft F_{z} ändern, so dass, wie in Fig. 13 beispielhaft dargestellt, die Deformationen D152 und D154 in den Deformationskonzentrationsbereichen 152 und 154 signifikant kleiner sein können als die Deformationen D156 und D158 in den Deformationskonzentrationsbereichen 156 und 158.

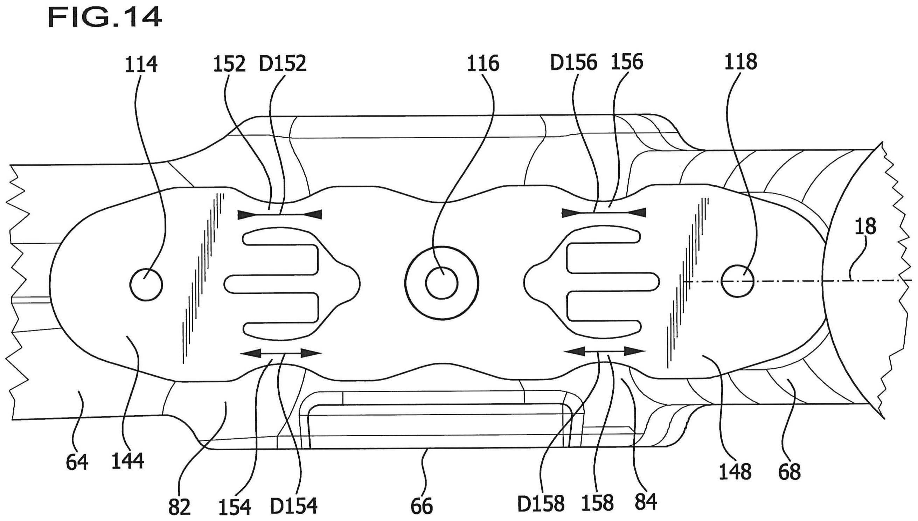

Wiederum anders verhält sich die Situation bei Einwirken der Kraft F_{y}, wie in Fig. 14 dargestellt.

In diesem Fall tritt in den Deformationskonzentrationsbereichen 152 und 156 als Deformation D152 und D156 eine Stauchung auf, während in den Deformationskonzentrationsbereichen 154 und 158 jeweils eine Dehnung als Deformation D154 und D158 auftritt.

Dabei können die auf Stauchungen basierende Deformationen D152 und D156 gleich oder unterschiedlich sein und in gleicher Weise können auch die auf Dehnungen basierenden Deformationen D154 und D158 gleich oder unterschiedlich sein.

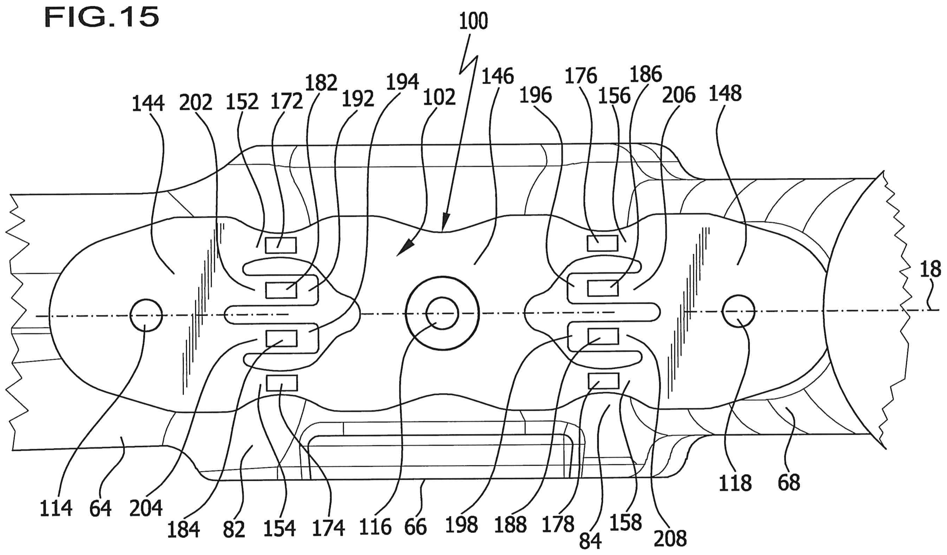

Zur Erfassung der Dehnungen oder Stauchungen, die durch Kräfte Fₓ und/oder F2 und/oder F_{y} in den Deformationskonzentrationsberiechen 152, 154, 156 und 158 auftreten, ist, wie in Fig. 15 dargestellt, in den Deformationskonzentrationsbereichen 152, 154, 156 und 158 jeweils ein Deformationssensor 172, 174, 176 und 178 angeordnet, mit welchen die Möglichkeit besteht, die Dehnungen und Stauchungen in den jeweiligen Deformationskonzentrationsbereichen 152, 154, 156 und 158 zu erfassen.

Da in den Deformationskonzentrationsbereichen 152, 154, 156 und 158 nicht nur Dehnungen und Stauchungen auftreten, die durch die Deformationsbereiche 82 und 84 des Haltearms 30 bedingt sind, sondern auch Dehnungen und Stauchungen auftreten können, die durch eine Temperaturausdehnung des Materials in den Deformationskonzentrationsbereichen 152, 154, 156 und 158 auftreten, sind den Deformationssensoren 172, 174, 176 und 178 Referenzdeformationssensoren 182, 184, 186 und 188 zugeordnet, die auf belastungsfreien Referenzbereichen 192, 194, 196 und 198 des Deformationsübertragungselements 102 angeordnet sind, wobei diese belastungsfreien Referenzbereiche 192, 194, 196 und 198 vorzugsweise als möglichst dicht bei den Deformationskonzentrationsbereichen 152, 154, 156, 158 angeordnete Zungen 202, 204, 206 und 208 gebildet sind, die sich ausgehend von beispielsweise den deformationsfreien Bereichen 144 und 148 im Wesentlichen parallel zu den Deformationskonzentrationsbereichen 152, 154, 156 und 158 jedoch berührungsfrei zu diesen und auch zum deformationsfreien Bereich 146 erstrecken, wobei vorzugsweise die belastungsfreien Referenzbereiche 192, 194, 196 und 198 im Bereich, in dem diese die Referenzdeformationssensoren 182, 184, 186 und 188 tragen, im Wesentlichen denselben Materialquerschnitt mit derselben Materialquerschnittsform aufweisen wie die Deformationskonzentrationsbereiche 152, 154, 156 und 158 und außerdem sind vorzugsweise auch die Referenzdeformationssensoren 182, 184, 186, 188 mit den Deformationssensoren 172, 174, 176 und 178 identisch ausgebildet.

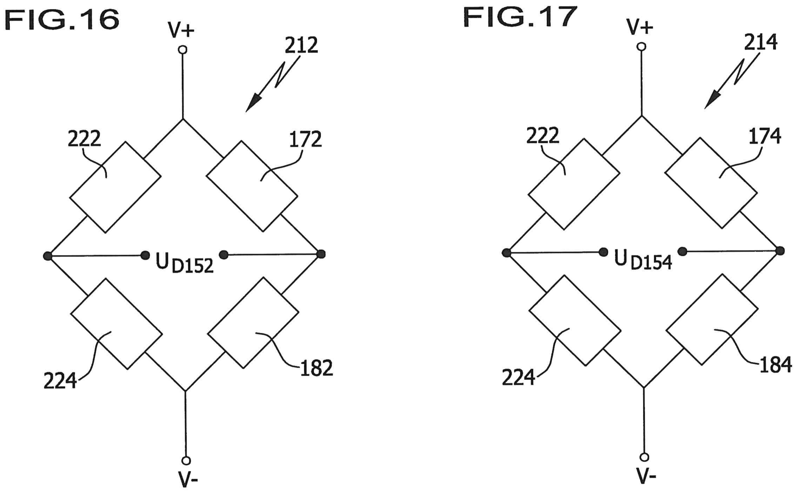

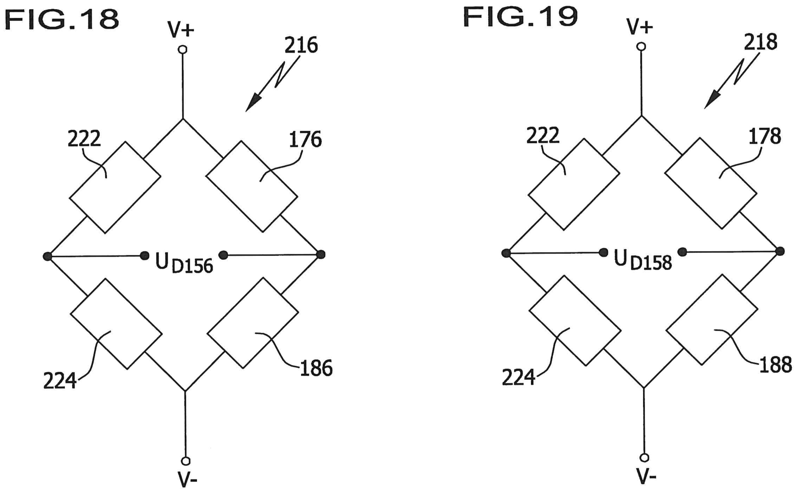

Zur elektronischen Erfassung der Dehnungen und Stauchungen in den Deformationskonzentrationsbereichen 152, 154, 156 und 158 sind die in diesen angeordneten Deformationssensoren 172, 174, 176 und 178 jeweils in Wheatstone-Brücken 212, 214, 216 und 218 angeordnet, wobei die jeweiligen Wheatstone-Brücken 212, 214, 216 und 218 zwischen Versorgungsanschlüssen V+ und V- liegen, wie in den Fig. 16 bis 19 dargestellt.

Ferner sind die in den Wheatstone-Brücken 212, 214, 216, 218 die Deformationssensoren 172, 174, 176 und 178 zwischen den Versorgungsanschüssen V+ und V- in Reihe geschaltet mit den diesen jeweils zugeordneten Referenzdeformationssensoren 182, 184, 186 und 188, und dieser Reihenschaltung der Deformationssensoren 172, 174, 176 und 178 mit den Referenzdeformationssensoren 182, 184, 186 und 188 sind zur Bildung der Wheatstone-Brücken 212, 214, 216, 218 Wiederstände 222 und 224 parallelgeschaltet, wobei die Wiederstände 222 und 224 dieseleben festen Werte aufweisen.

Somit kann in den jeweiligen Wheatstone-Brücken 212, 214, 216 und 218 an den Mittelabgriffen zwischen den Deformationssensoren 172, 174, 176 und 178 und den Referenzdeformationssensoren 182, 184, 186 und 188 und den Mittelabgriffen zwischen den Wiederständen 222 und 224 jeweils eine Spannung U abgegriffen werden, die im Wesentlichen den Deformationen, das heißt den Dehnungen und Stauchungen, entspricht, die in den Deformationskonzentrationsbereichen 152, 154, 156 und 158 auftreten, wobei durch das Vorsehen der Referenzdeformationssensoren 182, 184, 186, 188 Temperatureffekte und insbesondere auch Temperaturdehnungen in den Deformationskonzentrationsbereichen 152, 154, 156 und 158 weitgehend kompensiert sind, was insbesondere dann möglich ist, wenn die Referenzdeformationssensoren 182, 184, 186 und 188 identische Sensoren sind, wie die Deformationssensoren 172, 174, 176 und 178.

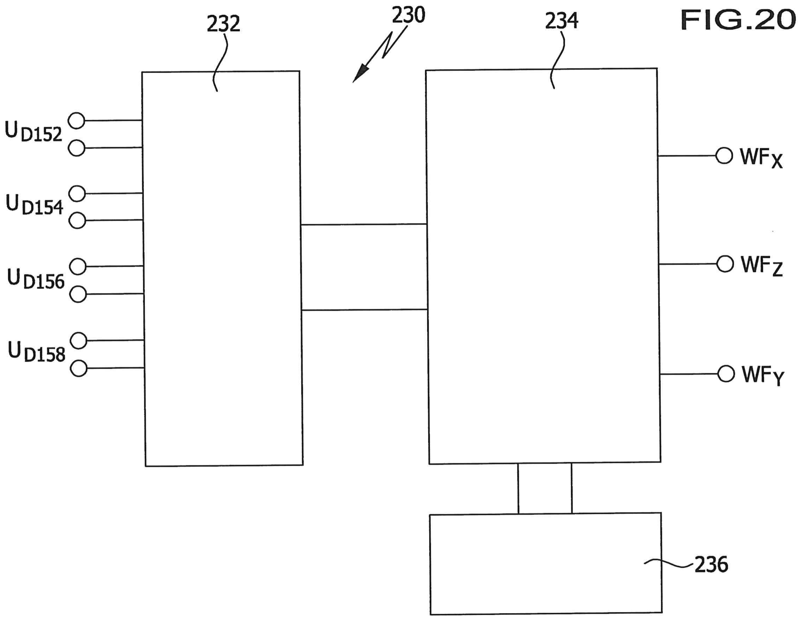

Die den Deformationen in den Wheatstone-Brücken 212, 214, 216, 218 abgegriffenen Deformationskonzentrationsbereichen 152, 154, 156 und 158 entsprechenden Spannungen UD152, UD154, UD156 und UD158 werden wie in Fig. 20 dargestellt einem A/D-Wandler 232 einer diesen umfassenden Auswerteschaltung 230 zugeführt, die außerdem einen mit dem A/D-Wandler 232 gekoppelten Prozessor 234 aufweist, welcher aus den digitalen Werten der Spannungen UD152, UD154, UD156 und UD158 und durch Vergleich derselben mit im Rahmen eines Eichvorgangs ermittelten und in einem Speicher 236 abgespeicherten Transformationswerten für die Werte der Spannungen UD152, UD154, UD156 und UD158, beispielsweise an entsprechenden Ausgängen Werte WFₓ, WF_{z} und WF_{y} ausgibt, die den Kräften Fₓ, F_{z} und F_{y} zugeordnet sind.

In einfachsten Fall ist in dem Speicher 236 eine für alle Raumrichtungen gültige Transformationsmatrix gespeichert, mit welcher sich die digitalen Werte der Spannungen UD152, UD154, UD156 und UD158 in Werte WFₓ und WF_{z} und WF_{y} für die auf das Ankuppelelement 40 wirkenden Kräfte umrechnen lassen.

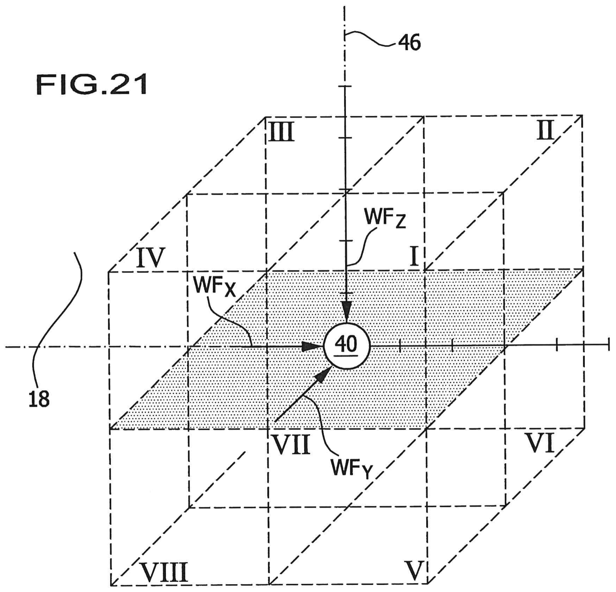

Eine Verbesserung der Qualität der Werte WFₓ, WF_{z} und WF_{y} lässt sich dann erreichen, wenn die Kalibrierung für in jedem der um das Anhängeelement 40 angeordneten Oktanten I bis VIII gemäß Fig. 21 liegende Wertepaarungen WFₓ, WF_{z} und WF_{y} erfolgt, so dass auch die Möglichkeit besteht, nichtlineare Korrelation zwischen den auf das Ankuppelelement 40 wirkenden Kräften F_{z}, F_{z}, F_{y} und den digitalen Werten der Spannungen UD152, UD154, UD156 und UD158 in die Kalibrierung und somit Transformation dieser Werte der Spannungen UD152, UD154, UD156 und UD158 in die Werte WFₓ, WF_{z} und WF_{y} für die auf das Ankuppelelement 40 wirkenden Kräfte einzubeziehen.

Dadurch wird die Genauigkeit der ermittelten Werte WFₓ, WF_{z} und WF_{y} signifikant verbessert.

Hinsichtlich der Anordnung der Auswerteschaltung 230 umfassend insbesondere den A/D-Wandler 232, den Prozessor 234 und den Speicher 236 sind die unterschiedlichsten Möglichkeiten denkbar.

Beispielsweise wäre es denkbar, die Auswerteschaltung 230 direkt auf dem Deformationsübertragungselement 102 anzuordnen.

Besonders günstig ist es jedoch, wenn die Auswerteschaltung 230 auf einer Schaltungsplatine 240 angeordnet ist, die mit dem Deformationsübertragungselement 102 gekoppelt, jedoch von diesem separat angeordnet ist.

Auf dieser Schaltungsplatine 240 können dann nicht nur die Auswerteschaltung 230, sondern auch die Widerstände 222 und 224 der jeweiligen Wheatstone-Brücken 212, 214, 216 und 218 angeordnet werden.

Eine besonders vorteilhafte Ausführungsform sieht dabei vor, dass die Deformationssensoren 172, 174, 176 und 178 sowie die Referenzdeformationssensoren 182, 184, 186 und 188 auf einer Seite des Deformationsübertragungselements 102 angeordnet werden und zwar auf einer Seite, die der Schaltungsplatine 240 zugewandt ist, während auf der Schaltungsplatine 240 die Auswerteschaltung 230 insbesondere mit dem A/D-Wandler 232, dem Prozessor 234 und dem Speicher 236 auf einer Seite angeordnet sind, die ebenfalls dem Deformationsübertragungselement 102 zugewandt ist.

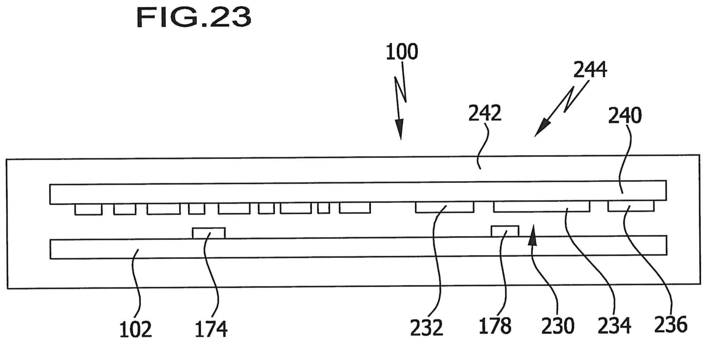

Vorzugsweise sind das Deformationsübertragungselement 102 und die Schaltungsplatine 240 noch in ein Umhüllungsmaterial 242 eingeschlossen oder eingegossen, so dass das Deformationsübertragungselement 102, die Schaltungsplatine 240 und das Umhüllungsmaterial 242 eine gemeinsame Einheit 244 bilden (Fig. 23).

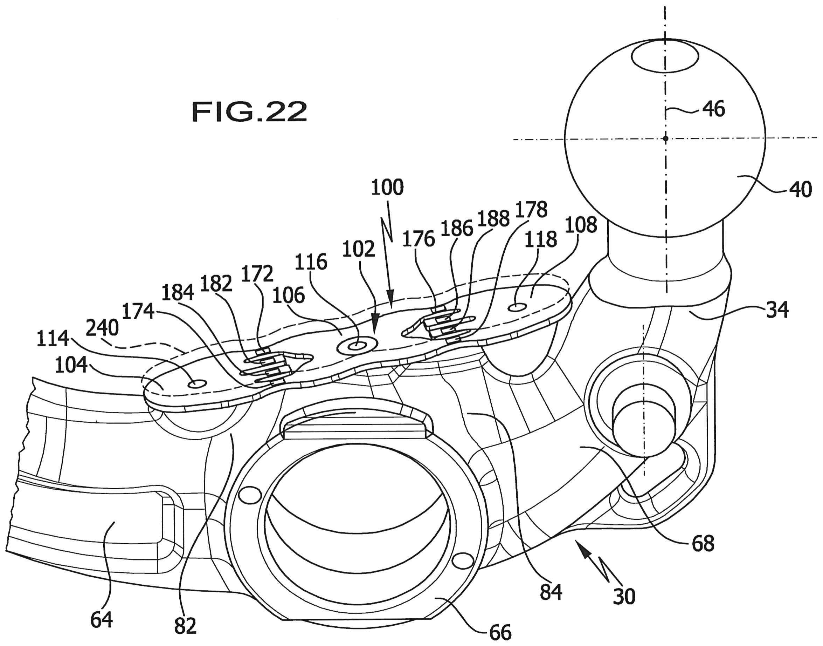

Diese Einheit 244 kann an den Verbindungselementen 114, 116 und 118 entweder so montiert werden, dass die Schaltungsplatine 240 auf einer dem Haltearm 30 abgewandten Seite des Deformationsübertragungselements 102 liegt, wie beispielsweise in Fig. 22 dargestellt.

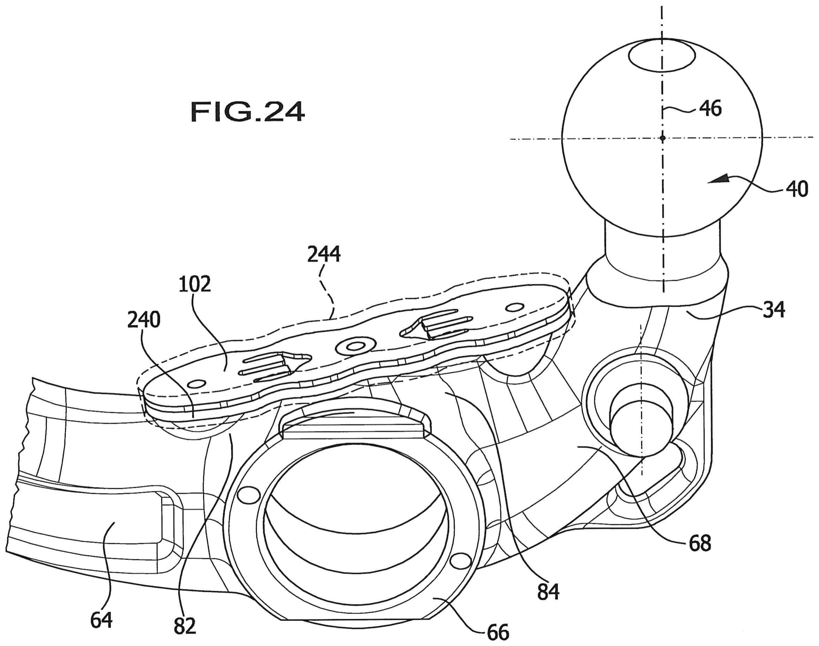

Es besteht aber auch bei einem zweiten Ausführungsbeispiel die Möglichkeit, die Einheit 244 so anzuordnen, dass die Schaltungsplatine 240 auf einer dem Haltearm 30 zugewandten Seite des Deformationsübertragungselements liegt, wie beispielsweise in Fig. 24 dargestellt.

Bei einem dritten Ausführungsbeispiel ist zur Absicherung der Funktionen der Referenzdeformationssensoren 182, 184, 186 und 188 beispielsweise jedem der Referenzdeformationssensoren 182, 184, 186, 188 jeweils ein separater Temperatursensor 252, 254, 256 und 258 zugeordnet.

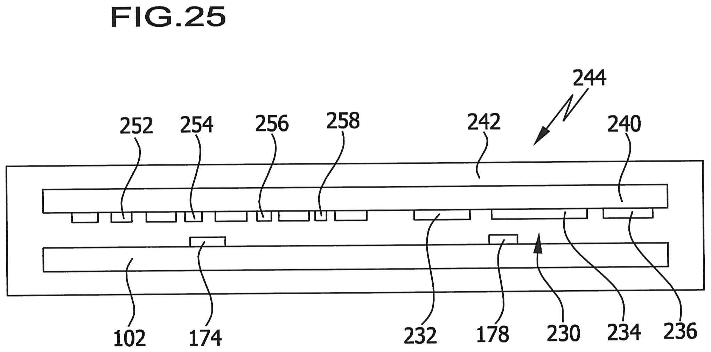

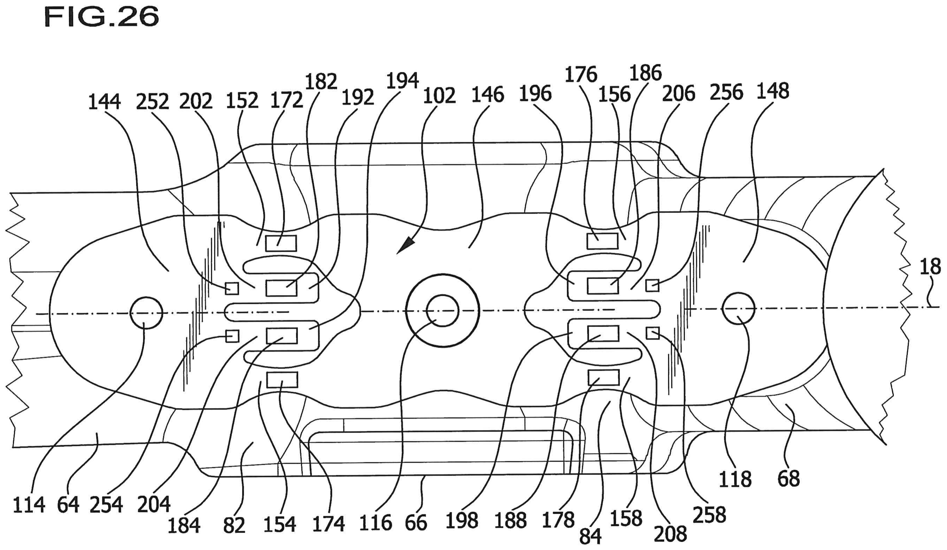

Die separaten Temperatursensoren 252, 254, 256, 258 können entweder auf der Schaltungsplatine 240 angeordnet sein, wie in Fig. 25 dargestellt, oder, wie bei einem vierten Ausführungsbeispiel in Fig. 26 dargestellt, auf dem Deformationsübertragungselement 102.

Ein derartiger zusätzlicher Temperatursensor 252, 254, 256, 258 eröffnet die Möglichkeit, eine zusätzliche Temperaturmessung durchzuführen, um zu überprüfen, ob die Referenzdeformationssensoren 182, 184, 186 und 188 voll funktionsfähig sind oder ob durch Funktionseinschränkungen oder Funktionsausfälle dieser Referenzdeformationssensoren 182, 184, 186, 188 Fehlmessungen bezüglich der Spannungen UD152, UD154, UD156 und UD158 vorliegen könnten.

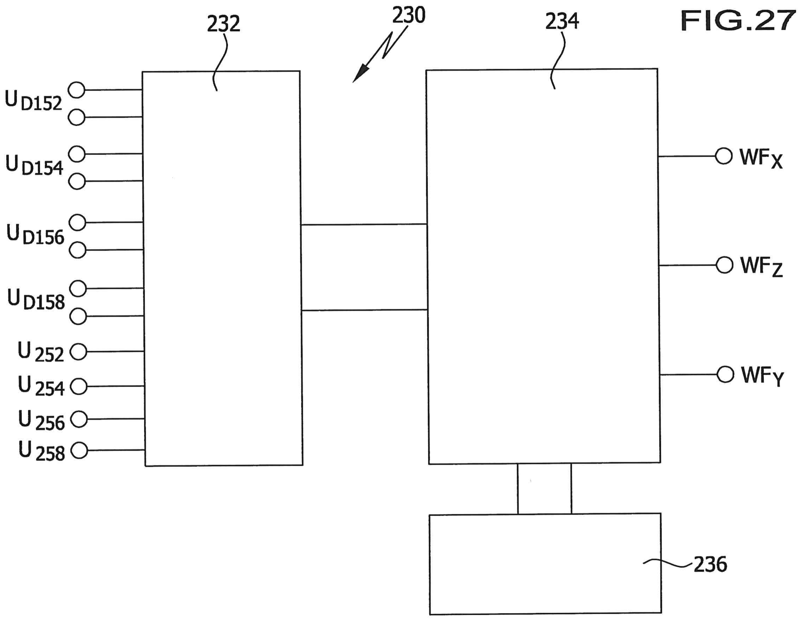

Die beispielsweise an diesen Temperatursensoren 252, 254, 256 und 258 gemessenen Spannungen UD252, UD254, UD256 und UD258 werden sowohl in Fall der Anordnung auf der Platine 240 (Fig. 25) als auch im Fall der Anordnung auf dem Deformationsübertragungselement 102 (Fig. 26) ebenfalls, wie in Fig. 27 dargestellt, dem A/D-Wandler 232 oder dem Prozessor 234 direkt zugeführt und von dem Prozessor 234 vor Durchführung der Auswertung der den Spannungen UD152, UD154, UD156 und UD158 entsprechenden digitalen Werte überprüft.

Bei einem fünften Ausführungsbeispiel ist mit der Trägereinheit 20 ein als Ganzes mit 30' bezeichneter Haltearm dadurch verbunden, dass das erste Ende 32' des Haltearms 30' entweder unmittelbar oder über eine Lagereinheit 36' an der Trägereinheit 20, vorzugsweise an dem Querträger 22, gehalten ist.

Der Haltearm 30' umfasst einen Aufnahmekörper 31 und dem ersten Ende 32' und dem zweiten Ende 34' angeordnet ist und zur Aufnahme eines Ankuppelelements 40' ausgebildet ist, welches beispielsweise zum Anhängen eines Anhängers oder zum Fixieren einer Lastenträgereinheit vorgesehen ist.

Beispielsweise ist ein derartiges Ankuppelelement 40' als an einem Trägerarm 42' gehaltene Kupplungskugel 43' ausgebildet, welche eine vielfach übliche Verbindung mit einer Zugkugelkupplung eines Anhängers erlaubt, wobei der Trägerarm 42' mit einem Einsteckabschnitt 45 in eine Einsteckaufnahme 33' des Aufnahmekörpers 31' durch eine in der Arbeitsstellung A in Fahrtrichtung gesehen rückwärtige Einstecköffnung 35 in den Aufnahmekörper 31 einsteckbar und in diesem fixierbar ist.

Das Ankuppelelement 40' ist beispielsweise mittels des Trägerarms 42' mit dem Haltearm 30' derart verbunden, dass sich die Kupplungskugel 43 ausgehend von einer einer Fahrbahn 44 abgewandten Seite des Trägerarm 42' in Richtung einer bei horizontaler Fahrbahn 44 mit ungefähr vertikal verlaufenden Mittelachse 46, erstreckt die im Fall der Kupplungskugel 43' durch einen Kugelmittelpunkt 48 hindurch verläuft.

Insbesondere ist die Einsteckaufnahme 33' so ausgebildet, dass diese den Einsteckabschnitt 45 quer zu einer Einsteckrichtung E formschlüssig und lösbar aufnimmt, und eine Sicherung gegen eine Bewegung in Einsteckrichtung ER durch ein Formschlusselement 41 vorsieht.

Insbesondere wird der Einsteckabschnitt 45 des Trägerarms 42' in dem Aufnahmekörper 31 durch einen quer zur Fahrzeuglängsmittelebene 18 verlaufenden und sowohl die Aufnahmekörper 31 als auch den Trägerarm 42' durchsetzenden Fixierbolzen 41 lösbar fixiert.

Ein derart ausgebildetes Ankuppelelement 40' erlaubt aber auch eine einfache Montage einer Lastenträgereinheit, da vielfach gebräuchliche Lastenträgereinheiten ebenfalls so ausgebildet sind, dass sie an der Kupplungskugel 43 montierbar und gegebenenfalls noch zusätzlich an dem Haltearm 30 abstützbar sind.

Alternativ dazu ist aber auch als Ankuppelelement 40' lediglich ein an der Lastenträgereinheit gehaltener Trägerarm 42 mit einem zum Einstecken in die Einsteckaufnahme 33' geeigneten Einsteckabschnitt 45 einsetzbar.

Zur Verbesserung der ästhetischen Wirkung ist vorzugsweise der Querträger 22 unter einer heckseitigen Stoßfängereinheit 50 der Kraftfahrzeugkarosserie 12 angeordnet, wobei die Stoßfängereinheit 50 beispielsweise den Querträger 22 und einen Teil des ersten Endes 32' des Haltearms 30' verdeckt.

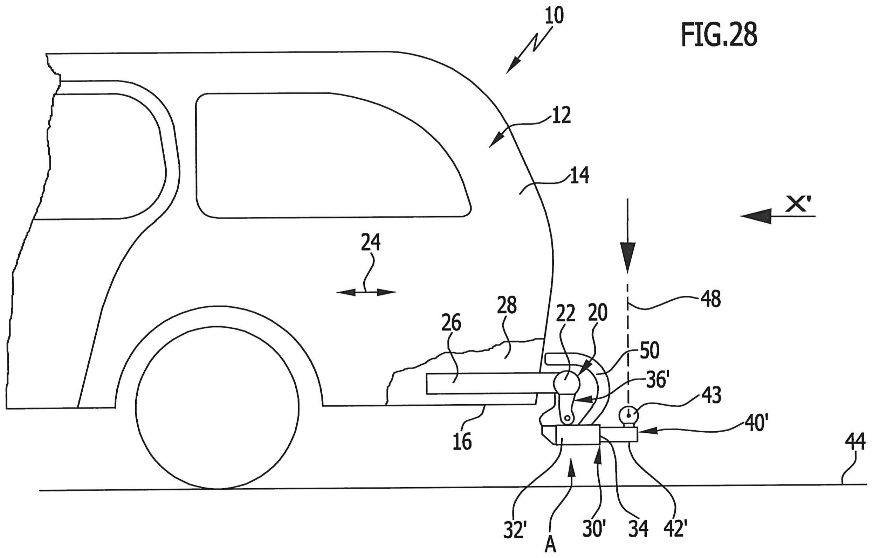

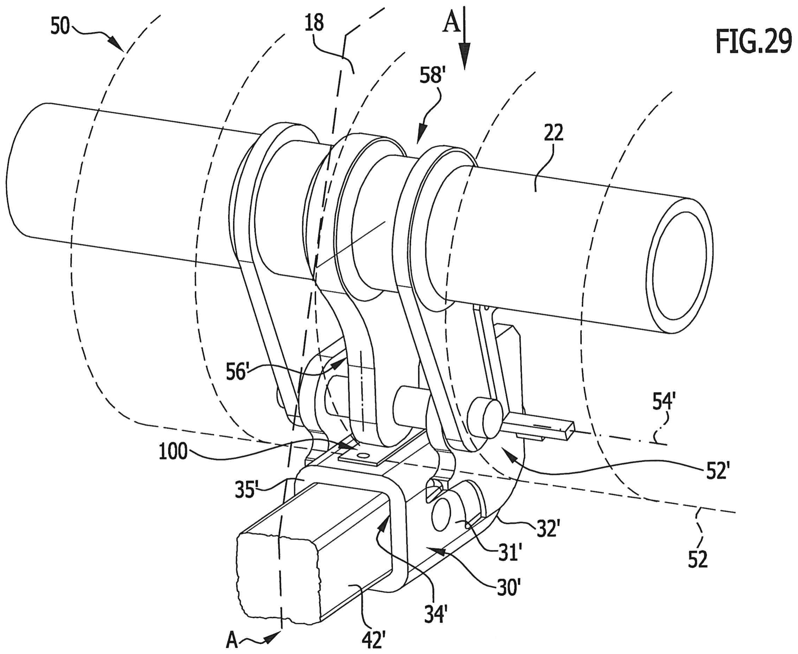

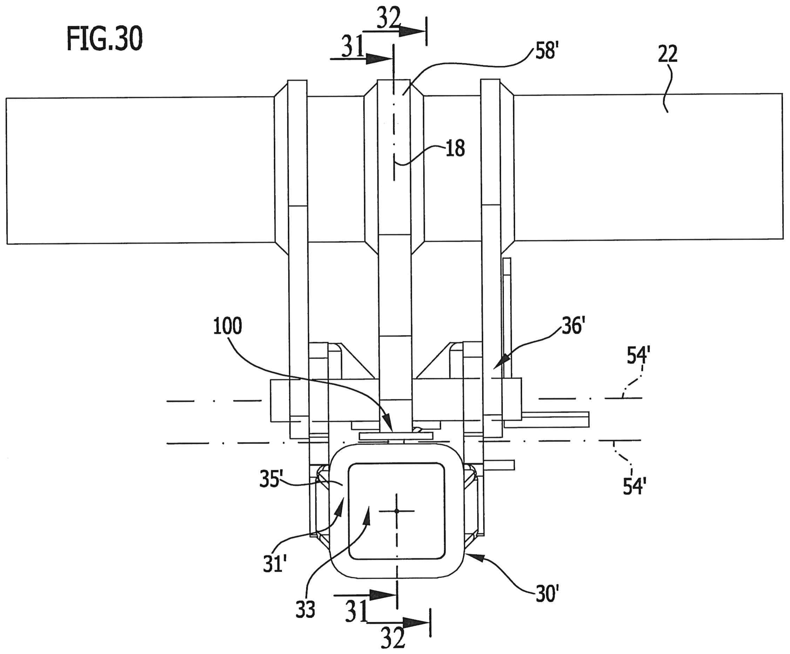

Der Haltearm 30' trägt, insbesondere bei dem dargestellten fünften Ausführungsbeispiel, durch den in die Einsteckaufnahme 33' eingesteckten Einsteckabschnitt 45 das die Kupplungskugel 43 umfassende Ankuppelelement 40', wobei sich der Haltearm 30', wie insbesondere in den Fig. 28 bis 32 dargestellt, ausgehend von der Schwenklagereinheit 36' erstreckt, mit welcher der Haltearm 30' an seinem ersten Endbereich 32' verbunden ist, wobei beispielsweise an dem ersten Endbereich 32' ein Schwenklagerkörper 52' der Schwenklagereinheit 36' angeformt ist.

Der Schwenklagerkörper 52' der Schwenklagereinheit 36' ist bei dem fünften Ausführungsbeispiel um eine insbesondere quer zu der vertikalen Fahrzeuglängsmittelebene 18 verlaufende Schwenkachse 54' verschwenkbar an einer Schwenklageraufnahme 56' gelagert, die einerseits den Schwenklagerkörper 52' um die Schwenkachse 54' drehbar führt und andererseits eine Verriegelung umfasst, die in der Arbeitsstellung A und der Ruhestellung R eine drehfeste Festlegung des Haltearms 30' gegenüber Schwenkbewegungen um die Schwenkachse 54' ermöglicht.

Hinsichtlich der Ausbildung der Schwenklagereinheit 36' und der jeweiligen Verriegelung des Schwenklagerkörpers 52' relativ zur Schwenklageraufnahme 56' wird vollinhaltlich auf die DE 10 2016 107 302 A1 Bezug genommen.

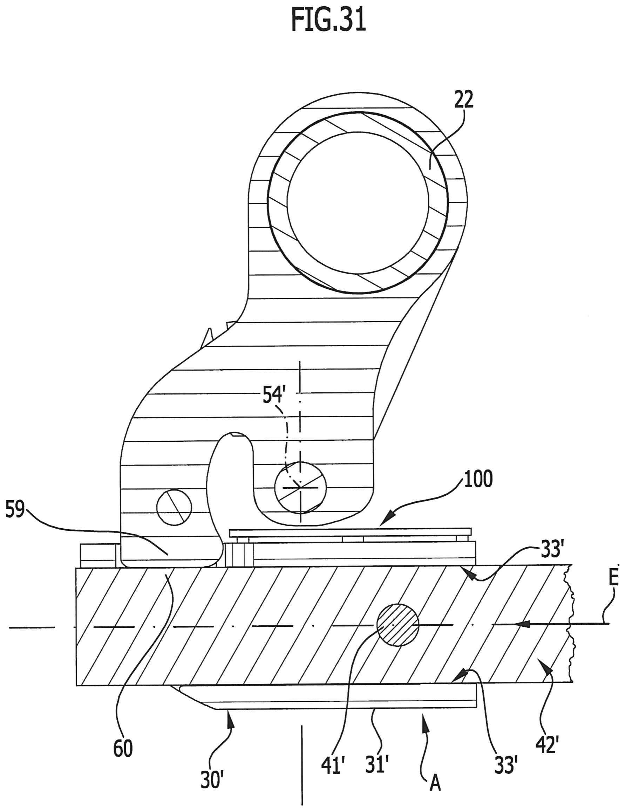

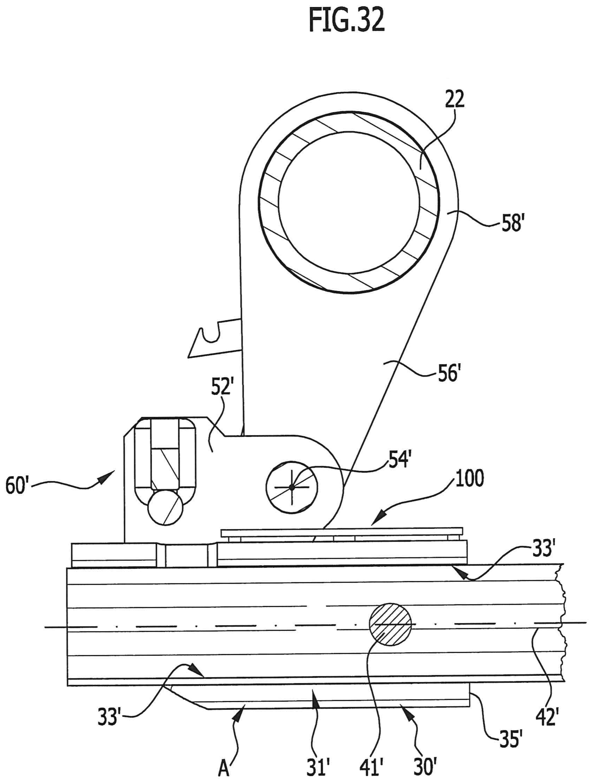

Insbesondere ist zur Verriegelung des Schwenklagerkörpers 52' in der Arbeitsstellung A ein in Fig. 31 dargestelltes Anschlagelement 59' vorgesehen, das einen Durchbruch in dem Haltearm 30' durchgreift und sich auf einem, der Einstecköffnung 35' abgewandt angeordneten Ende des in die Einsteckaufnahme 33' eingesteckten Einsteckabschnitts 45 des Trägerarms 42' abstützt und dadurch eine Schwenkbewegung des Haltearms 30' mit dem Aufnahmekörper 31' um die Schwenkachse 54' bei gleichzeitigem Zusammenwirken mit einer Anschlageinheit 60' (Fig. 32), umfassend am Schwenklagerkörper 52' und der Schwenklageraufnahme 56' angeordnete Anschlagelemente, blockiert.

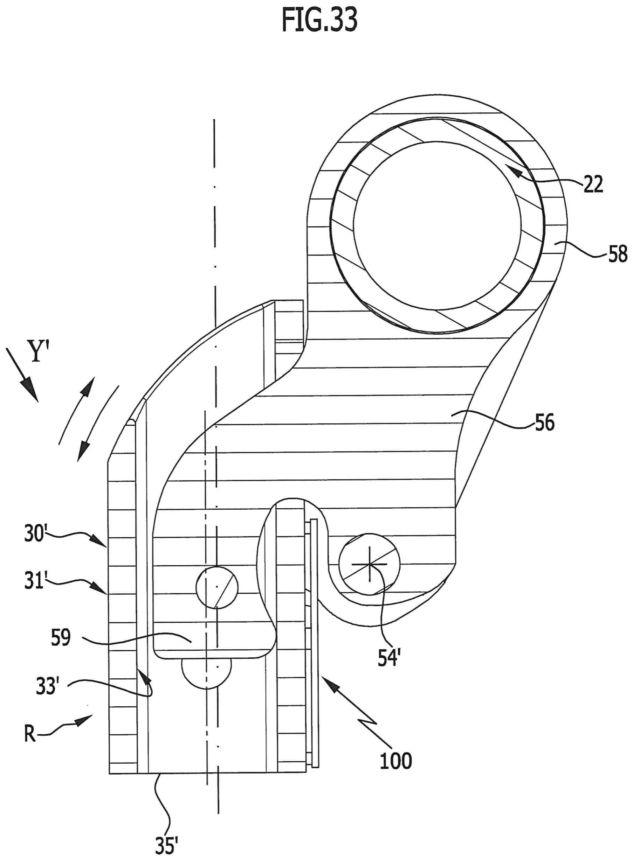

Außerdem erfolgt eine Verriegelung des Schwenklagerkörpers 52' in der Ruhestellung R durch eine Rasteinrichtung 61, dargestellt in Fig. 33.

Die Schwenklageraufnahme 56' ist dann ihrerseits wiederum über eine Schwenklagerbasis 58' mit dem Querträger 22 fest verbunden.

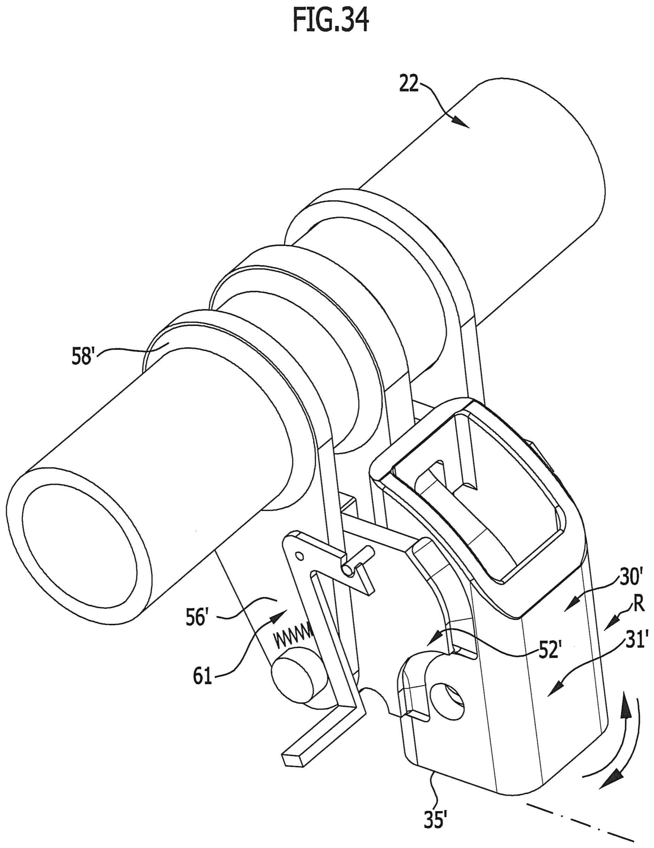

Wie in Fig. 28 bis 34 dargestellt, ist der Haltearm 30' bei diesem fünften Ausführungsbeispiel von einer Arbeitsstellung A, dargestellt in Fig. 28 bis 32, in welcher das die Kupplungskugel 43 aufweisende Ankuppelelement 40' so steht, dass dieses hinter der Stoßfängereinheit 50 auf einem einer Fahrbahn 44 abgewandten Seite steht, in eine Ruhestellung R, dargestellt in Fig. 33 und 34, verschwenkbar, in welcher bei demontierten Ankuppelelement 40' eine Einstecköffnung 35 der Einsteckaufnahme 33 der Fahrbahn 44 zugewandt angeordnet ist.

Insbesondere erstreckt sich dabei der Haltearm 30' in der Arbeitsstellung A im Wesentlichen in der vertikalen Fahrzeuglängsmittelebene 18, wobei diese das Ankuppelelement 40' im Fall einer Ausbildung desselben als mit dem Trägerarm 42 versehene Kupplungskugel 43 mittig schneidet, so dass in der Arbeitsstellung A eine vertikale Kugelmittelachse 48 in der Längsmittelebene 18 liegt.

Ausgehend von dem ersten Endbereich 32' erstreckt sich der Aufnahmekörper 31' des Haltearms 30' bei dem dargestellten Ausführungsbeispiel mit einem Ansatzstück 62' bis zu einem Zwischenstück 64', welches sich bis zu einem Zwischenkörper 66 erstreckt, an welchen sich auf einer dem Zwischenstück 64 und dem Ansatzstück 62 gegenüberliegende Seite ein Endstück 68 anschließt, über welches sich das Ankuppelelement 40' mit dem zwischen der Kupplungskugel 43 und dem Endstück 68 angeordneten Trägerarm 42 hinaus erstreckt.

Das Endstück 68 bildet hierbei den Endbereich 34' des Haltearms 30', wobei der Haltearm 30' mit der Einsteckaufnahme 33' die auf diese von dem Einsteckabschnitt 45 des Trägerarms 42' übertragenen Kräfte aufnimmt.

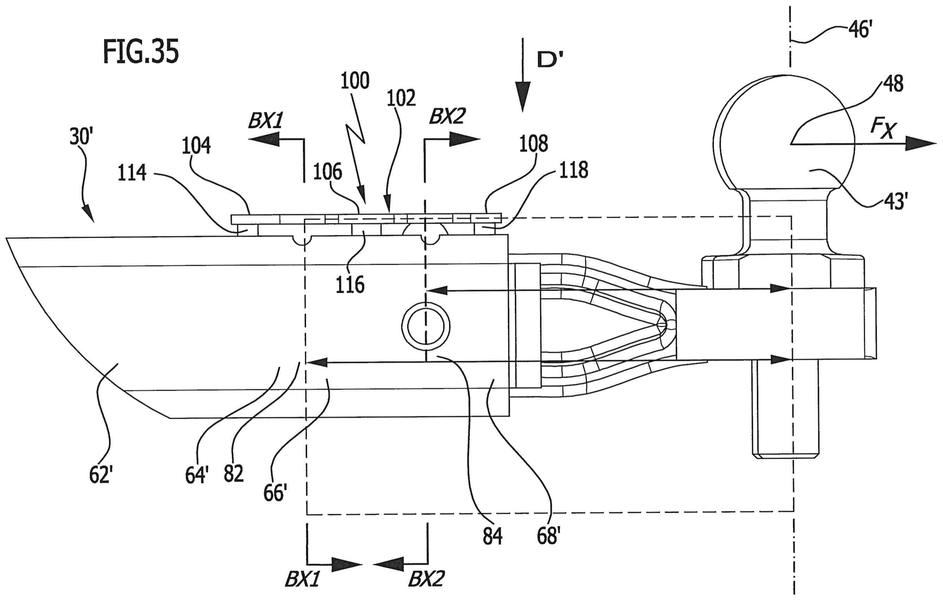

Ein derart ausgebildeter und die vom Einsteckabschnitt 45 übertragenen Kräfte aufnehmender Haltearm 30' ist, wie in Fig. 35 bis 40 dargestellt, durch das Ansatzstück 62', das Zwischenstück 64' des Zwischenkörper 66 und das Endstück 68 näherungsweise geradlinig ausgebildet, und in der Arbeitsstellung A, in welcher Belastungen des Ankuppelelements 40' auftreten und erfasst werden sollen, so ausgerichtet, dass die Kräfte, welche auf das Ankuppelelement 40', insbesondere den Kugelmittelpunkt 46, wirken über die den Haltearm 30' auf den Schwenklagerkörper 52' der Schwenklagereinheit 36' übertragen werden, wobei die Schwenkachse 54' einen Mittelpunkt der Kraftaufnahme durch die Schwenklagereinheit 36' darstellt.

Die auf das Ankuppelelement 40 einwirkenden Kräfte, werden wie in den Fig. 28 bis 32 dargestellt durch den Haltearm 30' auf die Lagereinheit 36' und von dieser auf die Trägereinheit 20 übertragen, die diese Kräfte dann in den Heckbereich 14 der Kraftfahrzeugkarosserie 12 einleitet, wobei zur Erfassung der auf das Ankuppelelement 40 wirkenden Kräfte unterschiedliche Bereiche des Haltearms 30' herangezogen werden.

Im vorstehend beschriebenen Ausführungsbeispiel wird exemplarisch ein erster Deformationsbereich 82 des Haltearms 30 herangezogen, der beispielsweise durch einen Übergangsbereich von dem Zwischenstücks 64 in den Zwischenkörper 66' gebildet ist, und ein zweiter Deformationsbereich des Haltearms 30' herangezogen, der durch einen Übergangsbereich des Zwischenkörpers 66' in das Endstücks 68' gebildet ist.

Ferner wird bei diesem Ausführungsbeispiel davon ausgegangen, dass der Zwischenkörper 66' eine hohe Stabilität gegenüber in der Längsmittelebene 18 und auch quer zu dieser verlaufende Biegekräfte aufweist, und insbesondere primär auf Zugbelastungen reagiert.

Der erste und zweite Deformationsbereich 82, 84 sind beispielsweise durch einen gezielt, beispielsweise durch Materialschwächung, ausgebildeten Bereich gebildet, wobei im einfachsten Fall die Materialschwächung durch eine eingebrachte Querschnittsvariation entstehen kann.

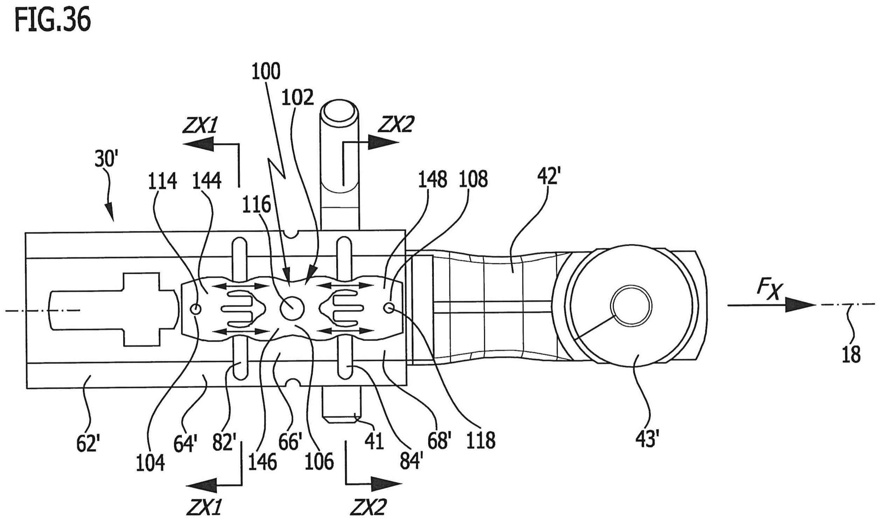

So führt beispielsweise die in Fig. 35 und 36 dargestellte Kraft Fx, die in der Längsmittelebene 18 und senkrecht zur Mittelachse 46 sowie von dem Schwenklagerkörper 52 weg gerichtet ist, dazu, dass in den Deformationsbereichen 82 und 84 einerseits Zugkräfte ZX1 und ZX2 (Fig. 36) auftreten und andererseits zumindest im Fall der von dem Trägerarm 42' in der Betriebsstellung auf einer der Fahrbahn 44 abgewandten Seite abstehender Kupplungskugel 43' auch noch Biegekräfte BX1 und BX2 (Fig. 35), die diesen Zugbelastungen ZX1 und ZX2 überlagert sind, wobei diese Kräfte in Richtung der Längsmittelebene 18, insbesondere in der Längsmittelebene 18, des Haltearms 30' wirken.

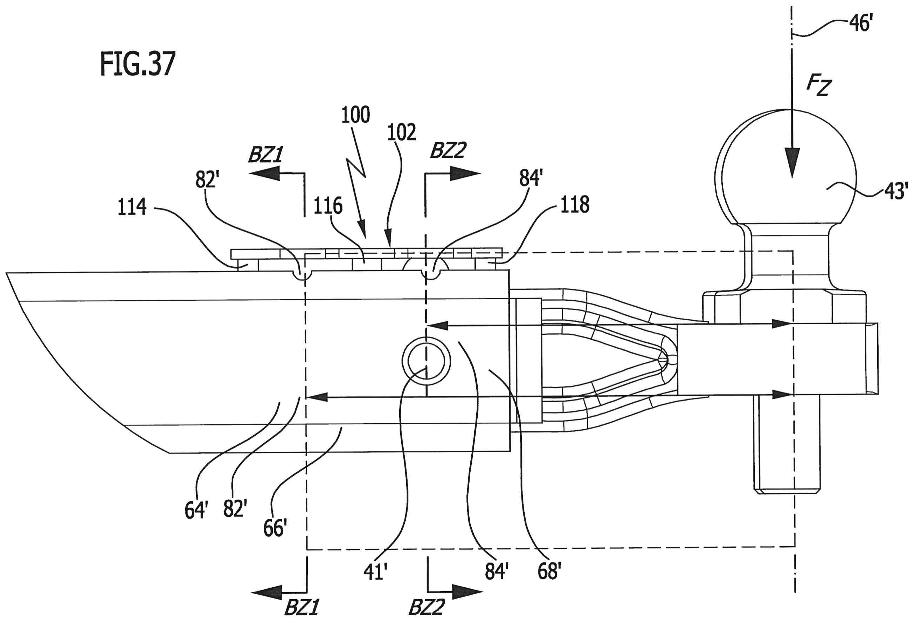

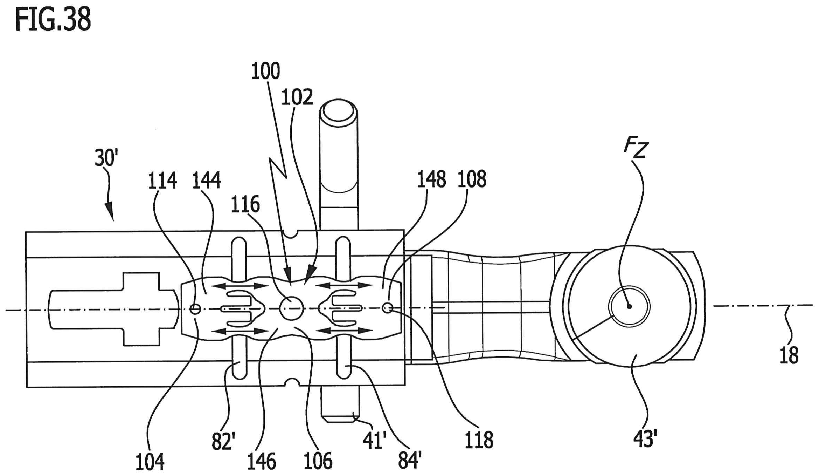

Ferner treten in den Deformationsbereichen 82 und 84, wie in Fig. 37 und 38 dargestellt, bei einer Belastung des Ankuppelelements 40 mit einer Kraft F_{z}, die in Richtung der Mittelachse 46 wirkt, in den Deformationsbereichen 82 und 84 im Wesentlichen Biegekräfte BZ1 und BZ2 auf, wobei diese Kräfte in Richtung der Längsmittelebene 18, insbesondere in der Längsmittelebene 18, des Haltearms 30 wirken, die somit bezogen auf eine sogenannte längeninvariable neutrale Faser NF auf einander gegenüberliegenden Seiten einander entgegengesetzte Wirkungen haben.

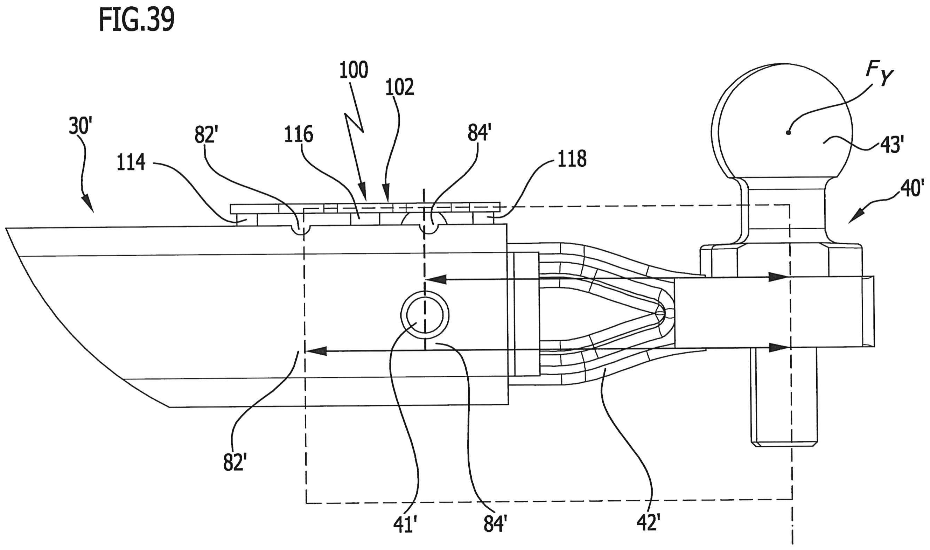

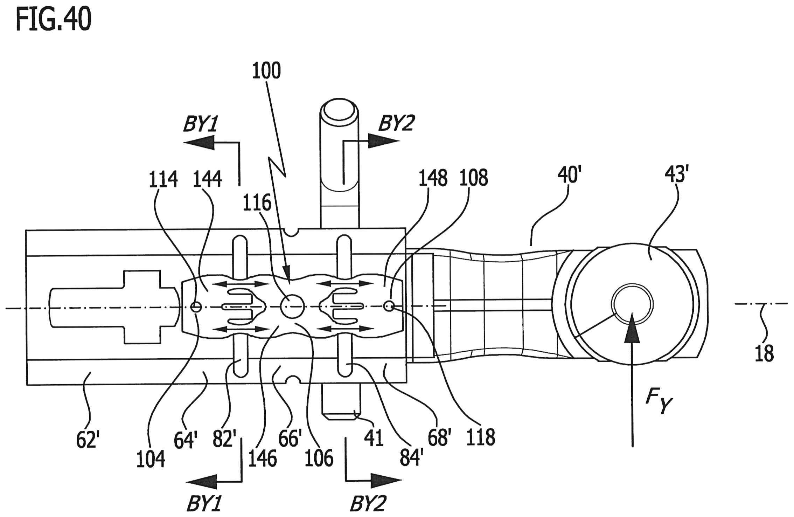

Außerdem führt eine auf das Ankuppelelement 40 einwirkende Kraft F_{y}, die senkrecht zur Längsmittelebene 18 und senkrecht zur Mittelachse 46 gerichtet ist, wie in Fig. 39 und 40 dargestellt, zu auf beiderseits der Längsmittelebene 18 jedoch auf unterschiedlichen Seiten derselben entgegengesetzt zueinander wirkenden Biegekräften BY1 und BY2.

Insbesondere werden die Deformationsbereiche 82 und 84 so ausgebildet, dass diese auf die Zugkräfte Z und die Biegekräfte B mit unterschiedlich großen Deformationen reagieren.

Zur Erfassung dieser Zugkräfte ZX1 und ZX2 sowie der Biegekräfte BX1 und BX2, BZ1 und BZ2 sowie BY1 und BY2 ist an dem Haltearm 30' ein als Ganzes mit 100 bezeichnetes Krafterfassungsmodul angeordnet.

Dieses Krafterfassungsmodul 100 umfasst ein Deformationsübertragungselement 102, welches an drei Befestigungsbereichen 104, 106 und 108 mit dem Haltearm 30' starr verbunden ist, wobei der Befestigungsbereich 104 auf einer dem ersten Ende 32 zugewandten Seite liegt und starr mit einem, beispielsweise an dem Zwischenstück 64 sitzenden, Ansatz 114 des Haltearms 30' verbunden ist, der Befestigungsbereich 106 ungefähr mittig zwischen den Befestigungsbereichen 104 und 108 angeordnet ist und beispielsweise mit einem auf dem Zwischenkörper 66 insbesondere mittig desselben sitzenden Halteansatz 116 verbunden ist und der Befestigungsbereich 108 mit einem an dem Endstück 68, beispielsweise in einem mittigen Bereich des Endstücks 68 zwischen dem Zwischenkörper 66 und dem Ende 34 angeordneten, Ansatz 118 des Haltearms 30 verbunden ist.

Die Verbindung zwischen den jeweiligen Verbindungselementen 114, 116 und 118 des Haltearms 30' erfolgt dabei starr und spielfrei, vorzugsweise durch eine Schweißung oder eine Klebung, die keinerlei Bewegungselastizität zwischen dem Deformationsübertragungselement 102 und den Verbindungselementen 114, 116 und 118 zulassen.

Vorzugsweise sind die Verbindungselemente 114, 116 und 118 ebenfalls starr mit dem Haltearm 30' verbunden, insbesondere an diesem angeformt.

Das Krafterfassungsmodul 100, das Deformationsübertragungselement 102, die Verbindungselemente 114, 116, 118, die Deformationssensoren 172, 174, 176, 178, die Referenzdeformationssensoren 182, 184, 186, 188, die Wheatstonebrücken 212, 214, 216, 218, die Auswerteschaltung 230 und die Schaltungsplatine 240 mit dem Umhüllungsmaterial 242 sowie die Temperatursensoren 252, 254, 256, 258 sind bei dem fünften Ausführungsbeispiel in derselben Weise ausgebildet wie beim ersten bis vierten Ausführungsbeispiel beschrieben und arbeiten auch in derselben Weise.

## Patentansprüche

1. Heckseitig an einer Kraftfahrzeugkarosserie (12) montierbare Vorrichtung zum Ankuppeln eines Anhängers oder einer Lastenträgereinheit, umfassend einen Haltearm (30), der an einem ersten Ende (32) im Betrieb fest mit der Kraftfahrzeugkarosserie (12) verbunden ist und an einem zweiten Ende (34) zum Tragen eines Ankuppelelements (40) ausgebildet ist,
**dadurch gekennzeichnet, dass** im Betrieb an dem Ankuppelelement (40) angreifende und von dem Haltearm (30) auf die Kraftfahrzeugkarosserie (12) übertragene Kräfte durch eine Auswerteeinheit (230) mit einer Sensoranordnung (170) erfasst werden, die mindestens drei Deformationssensoren (172, 174, 176) aufweist, und dass insbesondere die mindesten drei Deformationssensoren (172, 174, 176, 178) der Sensoranordnung (170) auf derselben Seite einer bei einer Biegedeformation des Haltearms (30) nicht längenvariablen neutralen Faser des Haltearms angeordnet sind.

2. Vorrichtung nach dem Oberbegriff des Anspruchs 1 oder nach Anspruch 1, **dadurch gekennzeichnet, dass** auf einer Seite des Haltearms (30, 30') ein Krafterfassungsmoduls (100) angeordnet ist, das eine Sensoranordnung (170) umfasst, welche im Betrieb an dem Ankuppelelement (40) angreifende und vom Haltearm (30) auf die Kraftfahrzeugkarosserie (12) übertragene Kräfte erfasst, dass insbesondere die Sensoranordnung mindestens drei Deformationssensoren (172, 174, 176) aufweist, dass insbesondere das Krafterfassungsmodul (100) im Betriebszustand auf keiner einer Fahrbahn (44) zugewandten Seite des Haltearms (30, 30') angeordnet ist, und dass insbesondere das Krafterfassungsmodul (100) im Betriebszustand auf einer einer Fahrbahn (44) abgewandten Seite des Haltearms (30, 30') angeordnet ist.

3. Vorrichtung nach dem Oberbegriff des Anspruchs 1 oder nach einem der voranstehenden Ansprüche, **dadurch gekennzeichnet, dass** im Betrieb an dem Ankuppelelement (40) angreifende und von dem Haltearm (30) auf die Kraftfahrzeugkarosserie (12) übertragene Kräfte durch eine Auswerteeinheit (230) mit einer Sensoranordnung (170) erfasst werden, die mindestens drei Deformationssensoren (172, 174, 176) aufweist, dass die Deformationssensoren (172, 174, 176, 178) auf mindestens einem Deformationsübertragungselement (102) angeordnet sind, das mit dem Haltearm (30) verbunden ist.

4. Vorrichtung nach dem Oberbegriff des Anspruchs 1 oder nach einem der voranstehenden Ansprüche, **dadurch gekennzeichnet, dass** im Betrieb an dem Ankuppelelement (40) angreifende und von dem Haltearm (30) auf die Kraftfahrzeugkarosserie (12) übertragene Kräfte durch eine Auswerteeinheit (230) mit einer Sensoranordnung (170) erfasst werden, die mindestens drei Deformationssensoren (172, 174, 176) aufweist, dass alle Deformationssensoren (172, 174, 176, 178) der Sensoranordnung (170) auf einem gemeinsamen Deformationsübertragungselement (102) angeordnet sind.

5. Vorrichtung nach einem der voranstehenden Ansprüche, **dadurch gekennzeichnet, dass** jeder der mindestens drei Deformationssensoren (172, 174, 176) bei Einwirkung von ein und derselben Kraft auf das Ankuppelelement (40) unterschiedlich große Deformationen des Haltearms (30, 30' erfasst.

6. Vorrichtung nach einem der voranstehenden Ansprüche, **dadurch gekennzeichnet, dass** das Deformationsübertragungselement (102) relativbewegungsfrei und damit starr an mindestens zwei Befestigungsbereichen (104, 106, 108) mit dem Haltearm (30) verbunden ist und dass mindestens einer der Deformationssensoren (172, 174, 176, 178) zwischen den Befestigungsbereichen (104, 106, 108) des Deformationsübertragungselements (102) angeordnet sind.

7. Vorrichtung nach einem der voranstehenden Ansprüche, **dadurch gekennzeichnet, dass** das Deformationsübertragungselement (102) mit mindestens drei Befestigungsbereichen (104, 106, 108) mit dem Haltearm (30) verbunden ist und dass jeweils zwischen zwei der Befestigungsbereiche (104, 106, 108) mindestens einer der Deformationssensoren (172, 174, 176, 178) angeordnet ist.

8. Vorrichtung nach einem der voranstehenden Ansprüche, **dadurch gekennzeichnet, dass** das Deformationsübertragungselement (102) in den Befestigungsbereichen (104, 106, 108) mit dem Haltearm (30) mittels Verbindungselementen (114, 116, 118) verbunden ist, dass insbesondere die Verbindungselemente (114, 116, 118) einerseits starr mit dem Haltearm (30) und andererseits starr mit den Befestigungsbereichen (104, 106, 108) des Deformationsübertragungselements (102) verbunden sind, dass insbesondere die Verbindungselemente (114, 116, 118) an den Haltearm (30) angeformt sind, dass insbesondere die Verbindungselemente (114, 116, 118) Deformationen des Haltearms (30) in jeweils zwischen den Verbindungselementen (114, 116, 118) liegenden Deformationsbereichen (82, 84) des Haltearms (30) auf die Befestigungsbereiche (104, 106, 108) des Deformationsübertragungselements (102) übertragen, dass insbesondere jeweils zwischen zwei Verbindungselementen (114, 116, 118) ein Deformationsbereich (82, 84) des Haltearms (30) liegt.

9. Vorrichtung nach einem der voranstehenden Ansprüche, **dadurch gekennzeichnet, dass** der Haltearm (30) mindestens zwei Deformationsbereiche (82, 84) aufweist, deren Deformationen über beiderseits des jeweiligen Deformationsbereichs (82, 84) angeordnete Verbindungselemente (114, 116, 118) auf Befestigungsbereiche (104, 106, 108) des Deformationsübertragungselements (102) übertragen wird, zwischen denen ein deformationsbehafteter Bereich (152, 154, 156) des Deformationsübertragungselements (102) liegt, dass insbesondere die mindestens zwei Deformationsbereiche (82, 84) in einer Erstreckungsrichtung des Haltearms (30) aufeinanderfolgend angeordnet sind.

10. Vorrichtung nach einem der voranstehenden Ansprüche, **dadurch gekennzeichnet, dass** mindestens ein Deformationssensor (172, 174, 176, 178) in einem der deformationsbehafteten Bereiche (152, 154, 156, 158) des Deformationsübertragungselements (102) angeordnet ist.

11. Vorrichtung nach einem der Ansprüche 9 oder 10, **dadurch gekennzeichnet, dass** jeder deformationsbehaftete Bereich (152, 154, 156, 158) mit einem deformationssteifen Bereich (144, 146, 148) des Deformationsübertragungselements (102) verbunden ist und dass die Befestigungsbereiche (104, 106, 108) jeweils in einem deformationssteifen Bereich (144, 146, 148) liegen, dass insbesondere die deformationsbehafteten Bereiche (152, 154, 156, 158) jeweils zwischen zwei deformationssteifen Bereichen (144, 146, 148) angeordnet sind, dass insbesondere die deformationssteifen Bereiche (144, 146, 148) und die deformationsbehafteten Bereiche (152, 154, 156, 158) in einer Deformationsrichtung aufeinanderfolgend angeordnet sind.

12. Vorrichtung nach einem der Ansprüche 9 bis 11, **dadurch gekennzeichnet, dass** die deformationsbehafteten Bereiche (152, 154, 156, 158) als Deformationskonzentrationsbereiche ausgebildet sind und/oder dass insbesondere das Material des Deformationsübertragungselements (102) außerhalb der deformationsbehafteten Bereiche (152, 154, 156, 158) als deformationssteifes oder deformationsinertes Material ausgebildet ist und/oder dass insbesondere das Material des Deformationsübertragungselements (102) in den deformationsbehafteten Bereichen (152, 154, 156, 158) durch eine Formgebung, beispielsweise eine Querschnittsverengung, deformationsgeneigt ist.

13. Vorrichtung nach einem der voranstehenden Ansprüche, **dadurch gekennzeichnet, dass** das Deformationsübertragungselement (102) neben dem jeweiligen deformationsbehafteten Bereich (152, 154, 156, 158) einen deformationsfreien Bereich (192, 194, 196, 198) aufweist, auf welchem mindestens ein Referenzdeformationssensor (182, 184, 186, 188) angeordnet ist, dass insbesondere der jeweilige deformationsfreie Bereich (192, 194, 196, 198) aus demselben Material wie der deformationsbehaftete Bereich (152, 154, 156, 158) ausgebildet ist, dass insbesondere der deformationsfreie Bereich (192, 194, 196, 198) des Deformationsübertragungselements (102) aus demselben Material, insbesondere mit derselben Materialdicke, hergestellt ist, wie der deformationsbehaftete Bereich (152, 154, 156, 158) und/oder dass insbesondere der jeweilige deformationsfreie Bereich (192, 194, 196, 198) einseitig mit einem deformationssteifen Bereich (144, 146, 148) des Deformationsübertragungselements (102) verbunden ist, dass insbesondere der deformationsfreie Bereich (192, 194, 196, 198) des Deformationsübertragungselements (102) zungenartig ausgebildet ist und/oder dass insbesondere die Referenzdeformationssensoren (182, 184, 186, 188) thermisch mit dem Deformationsübertragungselement (102) gekoppelt sind, dass insbesondere die Referenzdeformationssensoren (182, 184, 186, 188) mittels des Deformationsübertragungselements (102) thermisch mit den Deformationssensoren (172, 174, 176, 178) gekoppelt sind, dass insbesondere zur optimalen thermischen Kopplung zwischen dem jeweiligen Deformationssensor (172, 174, 176, 178) und dem diesem zugeordneten Referenzdeformationssensor (182, 184, 186, 188) jeder mit einem Deformationssensor (172, 174, 176, 178) versehene deformationsbehaftete Bereich (152, 154, 156, 158) thermisch mit dem diesem zugeordneten und den zugeordneten Referenzdeformationssensor (182, 184, 186, 188) tragenden deformationsfreien Bereich (192, 194, 196, 198) gekoppelt ist, dass insbesondere der den jeweiligen Referenzdeformationssensor (182, 184, 186, 188) tragende deformationsfreie Bereich (192, 194, 196, 198) dasselbe thermische Verhalten wie der den entsprechenden Deformationssensor (172, 174, 176, 178) tragende deformationsbehaftete Bereich (152, 154, 156, 158) aufweist, dass insbesondere der jeweilige den Referenzdeformationssensor (182, 184, 186, 188) tragende deformationsfreie Bereich (192, 194, 196, 198) eine geometrische Form aufweist, die mit dem den Deformationssensor (172, 174, 176, 178) tragenden deformationsbehafteten Bereich (152, 154, 156, 158) vergleichbar ist, dass insbesondere der deformationsfreie Bereich (192, 194, 196, 198) des Deformationsübertragungselements (102) aus demselben Material hergestellt ist wie der deformationsbehaftete Bereich (152, 154, 156, 158) des Deformationsübertragungselements (102), dass insbesondere den Referenzdeformationssensoren (182, 184, 186, 188) mindestens ein Temperatursensor (252, 254, 256, 258) zur Funktionsüberwachung zugeordnet ist.

14. Vorrichtung nach einem der voranstehenden Ansprüche, **dadurch gekennzeichnet, dass** das Deformationsübertragungselement (102) plattenähnlich ausgebildet ist und jeder einen Deformationssensor (172, 174, 176, 178) tragende deformationsbehaftete Bereich (152, 154, 156, 158) durch eine Querschnittseinschnürung des Deformationsübertragungselements (102) gebildet ist,
dass insbesondere die Querschnittseinschnürung des Deformationsübertragungselements (102) durch eine Einschnürung einer Flächenausdehnung des Deformationsübertragungselements (102) gebildet ist.

15. Vorrichtung nach einem der voranstehenden Ansprüche, **dadurch gekennzeichnet, dass** die Deformationssensoren und die Referenzdeformationssensoren als Dehnungssensoren, insbesondere Dehnungsmessstreifen, ausgebildet sind.

16. Vorrichtung nach einem der Ansprüche 1 bis 14, **dadurch gekennzeichnet, dass** die Deformationssensoren und die Referenzdeformationssensoren als magnetostriktive oder optische Sensoren ausgebildet sind.

17. Vorrichtung nach dem Oberbegriff des Anspruchs 1 oder nach einem der voranstehenden Ansprüche, **dadurch gekennzeichnet, dass** der Haltearm (30) zwischen dem ersten Ende (32) und dem zweiten Ende (34) einen ersten Deformationsbereich (82) und einen zweiten Deformationsbereich (84) aufweist, die bei einer parallel zur Fahrtrichtung (24) in der Längsmittelebene (18) des Haltearms (30) wirkenden Kraft (Fx) jeweils Deformationen erfahren, die sich von den Deformationen bei einer in der Längsmittelebene (18) quer zur Fahrtrichtung (24) wirkenden Kraft (F_{z}) unterscheiden, dass insbesondere der erste und der zweite Deformationsbereich (82, 84) bei einer quer insbesondere senkrecht zur Längsmittelebene (18) wirkenden Kraft (F_{y}) jeweils Deformationen erfahren, die sich von den Deformationen bei einer in der Längsmittelebene (18) parallel und/oder quer zur Fahrtrichtung (24) wirkenden Kraft Fₓ, F2) unterscheiden, dass insbesondere der erste und der zweite Deformationsbereich (82, 84) in Erstreckungsrichtung des Haltearms (30) aufeinanderfolgend angeordnet sind.

18. Vorrichtung nach einem der voranstehenden Ansprüche, **dadurch gekennzeichnet, dass** jeder Deformationssensor (172, 174, 176, 178) mit dem zugeordneten Referenzdeformationssensor (182, 184, 186, 188) in einer Wheatstone-Brücke (212, 214, 216, 218) verschaltet ist.

19. Vorrichtung nach einem der voranstehenden Ansprüche, **dadurch gekennzeichnet, dass** die Auswerteeinheit (230) einen Prozessor (234) aufweist, welcher die den Deformationen in dem deformationsbehafteten Bereichen (152, 154, 156, 158) entsprechenden Werte mit durch eine Kalibrierung in einem Speicher (236) ermittelten und gespeicherten Transformationswerten in die entsprechenden Werten (WFₓ, WF_{y}, WF_{z}) von drei quer, insbesondere senkrecht, zueinander verlaufenden Raumrichtungen wirkenden Kräften (Fₓ, F_{y}, F₂) auf das Ankuppelelement (40) umrechnet, dass insbesondere zwei der Kräfte (Fₓ, F_{z}) parallel zu insbesondere in, der Längsmittelebene (18) des Haltearms (30) jedoch quer, insbesondere senkrecht, zueinander verlaufen und dass die dritte Kraft (F_{y}) quer, insbesondere senkrecht, zur Längsmittelebene (18) des Haltearms (30) verläuft, dass insbesondere in dem Speicher (236) Transformationswerte für in unterschiedlichen Oktanten auf das Ankuppelelement (40) wirkende Kräftekombinationen gespeichert sind, dass insbesondere die Auswerteeinheit (230) Werte von Deformationssensoren (172, 174, 176, 178) und insbesondere Referenzdeformationssensoren (182, 184, 186, 188) zur Ermittlung der Deformationen erfasst, dass insbesondere die Auswerteeinheit (230) Werte von mindestens einem Temperatursensor (252, 254, 256, 258) zur Funktionsprüfung der Referenzdeformationssensoren (182, 184, 186, 188) erfasst, dass insbesondere die Auswerteeinheit (230) Werte von jeweils einem dem jeweiligen Referenzdeformationssensor zugeordneten Temperatursensor erfasst.

20. Vorrichtung nach einem der voranstehenden Ansprüche, **dadurch gekennzeichnet, dass** der Haltearm (30) an seinem zweiten Ende (34) das Ankuppelelement (40) trägt, dass insbesondere der Haltearm (30) und das Ankuppelelement (40) ein zusammenhängendes Teil bilden, dass insbesondere der Haltearm (30) als Kugelhals ausgebildet ist und an dem zweiten Ende (34) das eine Kupplungskugel (43) umfassende Ankuppelelement (40) trägt.

21. Vorrichtung nach einem der Ansprüche 1 bis 19, **dadurch gekennzeichnet, dass** der Haltearm (30') einen Aufnahmekörper (31') umfasst, der zur lösbaren Aufnahme des Ankuppelelements (40') ausgebildet ist, dass insbesondere der Aufnahmekörper (31') eine Einsteckaufnahme (33') aufweist, welche durch eine Einstecköffnung (35') zugänglich ist, dass insbesondere das Ankuppelelement (40') einen Trägerarm (42') umfasst, dass insbesondere der Trägerarm (42') mit einem Einsteckabschnitt (45') in die Einsteckaufnahme (33') einsteckbar und in dieser fixierbar ist, dass insbesondere der Trägerarm (42') eine Kupplungskugel (43) trägt, dass insbesondere der Einsteckabschnitt (45') quer in einer Einsteckrichtung (E) formschlüssig in der Einsteckaufnahme (33') aufgenommen ist und im Funktionszustand in Einsteckrichtung durch einen Formschlusskörper (41) fixiert ist.
